(19) Europäisches Patentamt
European Patent Office
Office européen des brevets

(11) **EP 3 637 732 A1**

(12) **EUROPEAN PATENT APPLICATION**
published in accordance with Art. 153(4) EPC

(43) Date of publication:
**15.04.2020 Bulletin 2020/16**

(51) Int Cl.:
*H04L 29/08* (2006.01)     *H04B 7/185* (2006.01)
*H04W 36/08* (2009.01)     *H04W 24/10* (2009.01)
*H04W 4/42* (2018.01)      *H04W 84/06* (2009.01)

(21) Application number: 18823799.4

(22) Date of filing: **29.06.2018**

(86) International application number:
**PCT/CN2018/093731**

(87) International publication number:
**WO 2019/001573 (03.01.2019 Gazette 2019/01)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.06.2017 CN 201710515534**

(71) Applicant: **Huawei Technologies Co., Ltd.
Longgang District
Shenzhen, Guangdong 518129 (CN)**

(72) Inventors:
• **SHI, Xiaoli
Shenzhen
Guangdong 518129 (CN)**
• **HUANG, Yada
Shenzhen
Guangdong 518129 (CN)**
• **ZHOU, Guohua
Shenzhen
Guangdong 518129 (CN)**

(74) Representative: **Epping - Hermann - Fischer
Patentanwaltsgesellschaft mbH
Schloßschmidstraße 5
80639 München (DE)**

(54) **METHOD, DEVICE AND SYSTEM FOR SELECTING PARAMETER CONFIGURATION**

(57)     Embodiments of this application provide a parameter configuration selection method, a device, and a system. The method includes the following steps: receiving, by a flight terminal, indication information sent by a network device, where the indication information is used to indicate an identifier of a target parameter configuration to which the flight terminal is to be switched; selecting, by the flight terminal according to the indication information, a parameter configuration corresponding to the identifier from a plurality of parameter configurations as the target parameter configuration, where the plurality of parameter configurations include at least a first parameter configuration and a second parameter configuration; and configuring, by the flight terminal, the flight terminal by using the target parameter configuration. According to the method, a proper parameter configuration can be selected based on a flight status of the flight terminal, thereby improving performance of the flight terminal.

FIG. 3

**Description**

**TECHNICAL FIELD**

The present invention relates to the communications field, and in particular, to a parameter configuration selection method, a device, and a system.

**BACKGROUND**

With the development of flight devices such as airplanes, airships, rockets, and drones, as a new member in the family of terminal devices, a flight terminal emerges and may be applied to various airplanes, airships, rockets, and drones. The flight terminal is widely applied in application scenarios such as infrastructure monitoring, wildlife protection, air search and rescue, pesticide spraying, and express delivery, providing great convenience for people's lives. In the future, the flight terminal will play an increasingly important role in people's lives.

Unlike a common terminal device in the family of terminal devices that usually moves only on the ground, the flight terminal may move on the ground or may fly in the air. Regardless of moving on the ground or flying in the air, the flight terminal can access a mobile communications network (Cellular network) by using a network device such as a base station on the ground, and transmit a radio signal by using the mobile communications network. When the flight terminal moves on the ground (lower than a height of the base station), a characteristic of the flight terminal is not different from a characteristic of a common terminal device. However, when the flight terminal flies in the air (higher than the height of the base station), the characteristic of the flight terminal is very different from the characteristic of the common terminal device.

A person skilled in the art finds, in a long-term study, that an existing parameter configuration solution for the flight terminal uses a parameter configuration solution for the common terminal device, and does not consider a difference between characteristics of the flight terminal in different statuses, thereby greatly affecting performance of the flight terminal.

**SUMMARY**

Embodiments of this application provide a parameter configuration selection method, a device, and a system, so as to select a proper parameter configuration based on a flight status of a flight terminal, thereby improving performance of the flight terminal.

According to a first aspect, a parameter configuration selection method is provided and includes the following steps:

receiving, by a network device, a status indication sent by a flight terminal, where the status indication is used to indicate a flight status of the flight terminal;
determining, by the network device, indication information based on the status indication, where the indication information is used to indicate a target parameter configuration to which the flight terminal is to be switched, and the target parameter configuration is a first parameter configuration or a second parameter configuration; and
sending, by the network device, the indication information to the flight terminal.

According to a second aspect, a parameter configuration selection method is provided and includes the following steps:

receiving, by a flight terminal, indication information sent by a network device, where the indication information is used to indicate an identifier of a target parameter configuration to which the flight terminal is to be switched;
selecting, by the flight terminal according to the indication information, a parameter configuration corresponding to the identifier from a plurality of parameter configurations as the target parameter configuration, where the plurality of parameter configurations include at least a first parameter configuration and a second parameter configuration; and
configuring, by the flight terminal, the flight terminal by using the target parameter configuration.

The first aspect and the second aspect respectively describe, from the network device side and the flight terminal, the parameter configuration selection methods provided in the embodiments of this application. By implementing the methods, a proper parameter configuration can be selected based on the flight status of the flight terminal, thereby improving performance of the flight terminal.

With reference to the first aspect or the second aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a thresh old parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

It may be understood that in the prior art, there is no study on the second parameter configuration. In this embodiment, it may be clearly indicated values of which parameters need to be modified in the second parameter configuration and which parameters need to be added to the second parameter configuration, compared with those in the first parameter configuration.

With reference to the first aspect or the second aspect, in some possible implementations, before the network device sends the indication information to the flight terminal, the network device sends the plurality of parameter configurations to the flight terminal by using a first air interface message. Correspondingly, the flight terminal receives, by using the first air interface message, the plurality of parameter configurations sent by the network device.

Specifically, if a connection status of the flight terminal relative to the network device is an idle mode, the first air interface message is a first broadcast message.

Specifically, if the connection status of the flight terminal relative to the network device is a connected mode, the first air interface message is a first radio resource control RRC message. The first RRC message is a first RRC connection setup message or a first RRC connection reconfiguration message.

With reference to the first aspect or the second aspect, in some possible implementations, the indication information is carried in a second air interface message.

Specifically, if a connection status of the flight terminal relative to the network device is an idle mode, the second air interface message is a second broadcast message.

Specifically, if the connection status of the flight terminal relative to the network device is a connected mode, the second air interface message is a second RRC message. The second RRC message is a second RRC connection setup message or a second RRC connection reconfiguration message.

With reference to the first aspect or the second aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a third aspect, a parameter configuration selection method is provided and includes the following steps:

receiving, by a network device, a status indication sent by a flight terminal, where the status indication is used to indicate a flight status of the flight terminal;
determining, by the network device based on the status indication, a target parameter configuration corresponding to the flight status, where the target parameter configuration includes a first parameter configuration and a second parameter configuration; and
sending, by the network device, the target parameter configuration to the flight terminal.

According to a fourth aspect, a parameter configuration selection method is provided and includes the following steps:

receiving, by a flight terminal, a target parameter configuration that is sent by a network device based on a flight status of the flight terminal, where the target parameter configuration includes a first parameter configuration or a second parameter configuration;
updating, by the flight terminal, a current parameter configuration to the target parameter configuration; and
configuring, by the flight terminal, the flight terminal by using the target parameter configuration.

The third aspect and the fourth aspect respectively describe, from the network device side and the flight terminal, the parameter configuration selection methods provided in the embodiments of this application. By implementing the methods, a proper parameter configuration can be selected based on the flight status of the flight terminal, thereby improving performance of the flight terminal.

With reference to the third aspect or the fourth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

It may be understood that in the prior art, there is no study on the second parameter configuration. In this embodiment, it may be clearly indicated values of which parameters need to be modified in the second parameter configuration and which parameters need to be added to the second parameter configuration, compared with those in the first parameter configuration.

With reference to the third aspect or the fourth aspect, in some possible implementations, the target parameter configuration is carried in an air interface message.

Specifically, if a connection status of the flight terminal relative to the network device is an idle mode, the air interface message is a broadcast message.

Specifically, if the connection status of the flight terminal relative to the network device is a connected mode, the air interface message is an RRC message. The RRC message is an RRC connection setup message or an RRC connection reconfiguration message.

With reference to the third aspect or the fourth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a fifth aspect, a parameter configuration selection method is provided and includes the following steps:

measuring, by a flight terminal, a flight environment to obtain a status parameter, where the status parameter includes at least one of a height, a quantity of neighboring cells, and a neighboring cell measurement value;
determining, by the flight terminal, a flight status of the flight terminal based on the status parameter;
selecting, by the flight terminal based on the flight status, a target parameter configuration corresponding to the flight status of the flight terminal from a plurality of parameter configurations, where the plurality of parameter configurations include at least a first parameter configuration and a second parameter configuration; and
configuring, by the flight terminal, the flight terminal by using the target parameter configuration.

With reference to the fifth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the fifth aspect, in some possible implementations, before the flight terminal selects the target parameter configuration from the plurality of parameter configurations based on a flight height, the flight terminal receives, by using an air interface message, the plurality of parameter configurations sent by the network device.

Specifically, if a connection status of the flight terminal relative to the network device is an idle mode, the air interface message is a broadcast message.

Specifically, if the connection status of the flight terminal relative to the network device is a connected mode, the air interface message is an RRC message. The RRC message is an RRC connection setup message or an RRC connection reconfiguration message.

With reference to the fifth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a sixth aspect, a network device is provided and includes a unit configured to perform the method according to the first aspect.

According to a seventh aspect, a flight terminal is provided and includes a unit configured to perform the method according to the second aspect.

According to an eighth aspect, a network device is provided and includes a unit configured to perform the method according to the third aspect.

According to a ninth aspect, a flight terminal is provided and includes a unit configured to perform the method according to the fourth aspect.

According to a tenth aspect, a network device is provided and includes a unit configured to perform the method according to the fifth aspect.

According to an eleventh aspect, a flight terminal is provided and includes a processor and a receiver that are coupled to each other, where

the receiver is configured to receive indication information sent by a network device, where the indication information is used to indicate an identifier of a target parameter configuration to which the flight terminal is to be switched; the processor is configured to select, according to the indication information, a parameter configuration corresponding to the identifier from a plurality of parameter configurations as the target parameter configuration, where the plurality of parameter configurations include at least a first parameter configuration and a second parameter configuration; and the processor is configured to configure the flight terminal by using the target parameter configuration.

With reference to the eleventh aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the eleventh aspect, in some possible implementations, before the flight terminal receives the indication information sent by the network device, the flight terminal receives, by using a first air interface message, the plurality of parameter configurations sent by the network device.

Specifically, if a connection status of the flight terminal relative to the network device is an idle mode, the first air interface message is a first broadcast message.

Specifically, if the connection status of the flight terminal relative to the network device is a connected mode, the first air interface message is a first radio resource control RRC message. The first RRC message is a first RRC connection setup message or a first RRC connection reconfiguration message.

With reference to the eleventh aspect, in some possible implementations, the indication information is carried in a second air interface message.

Specifically, if a connection status of the flight terminal relative to the network device is an idle mode, the second air interface message is a second broadcast message.

Specifically, if the connection status of the flight terminal relative to the network device is a connected mode, the second air interface message is a second RRC message. The second RRC message is a second RRC connection setup message or a second RRC connection reconfiguration message.

With reference to the eleventh aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a twelfth aspect, a network device is provided and includes a processor, a receiver, and a transmitter that are coupled to each other, where
the receiver is configured to receive a status indication sent by a flight terminal, where the status indication is used to indicate a flight status of the flight terminal;
the processor is configured to determine indication information based on the status indication, where the indication information is used to indicate a target parameter configuration to which the flight terminal is to be switched, and the target parameter configuration is a first parameter configuration or a second parameter configuration; and
the transmitter is configured to send the indication information to the flight terminal.

With reference to the twelfth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the twelfth aspect, in some possible implementations, before the network device sends the indication information to the flight terminal, the network device sends the plurality of parameter configurations to the flight terminal by using a first air interface message.

Specifically, if a connection status of the flight terminal relative to the network device is an idle mode, the first air interface message is a first broadcast message.

Specifically, if the connection status of the flight terminal relative to the network device is a connected mode, the first air interface message is a first radio resource control RRC message. The first RRC message is a first RRC connection setup message or a first RRC connection reconfiguration message.

With reference to the twelfth aspect, in some possible implementations, the indication information is carried in a second air interface message.

Specifically, if a connection status of the flight terminal relative to the network device is an idle mode, the second air interface message is a second broadcast message.

Specifically, if the connection status of the flight terminal relative to the network device is a connected mode, the second air interface message is a second RRC message. The second RRC message is a second RRC connection setup message or a second RRC connection reconfiguration message.

With reference to the twelfth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a thirteenth aspect, a flight terminal is provided and includes a processor and a receiver that are coupled to each other, where

the receiver is configured to receive a target parameter configuration that is sent by a network device based on a flight status of the flight terminal, where the target parameter configuration includes a first parameter configuration or a second parameter configuration;

the processor is configured to update a current parameter configuration to the target parameter configuration; and

the processor is configured to configure the flight terminal by using the target parameter configuration.

With reference to the thirteenth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the thirteenth aspect, in some possible implementations, the target parameter configuration is carried in an air interface message.

Specifically, if a connection status of the flight terminal relative to the network device is an idle mode, the air interface message is a broadcast message.

Specifically, if the connection status of the flight terminal relative to the network device is a connected mode, the air interface message is an RRC message. The RRC message is an RRC connection setup message or an RRC connection reconfiguration message.

With reference to the thirteenth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a fourteenth aspect, a network device is provided and includes a processor, a receiver, and a transmitter that are coupled to each other, where

the receiver is configured to receive a status indication sent by a flight terminal, where the status indication is used to indicate a flight status of the flight terminal;

the processor is configured to determine, based on the status indication, a target parameter configuration corresponding to the flight status, where the target parameter configuration includes a first parameter configuration or a second parameter configuration; and

the transmitter is configured to send the target parameter configuration to the flight terminal.

With reference to the fourteenth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the fourteenth aspect, in some possible implementations, the target parameter configuration is carried in an air interface message.

Specifically, if a connection status of the flight terminal relative to the network device is an idle mode, the air interface message is a broadcast message.

Specifically, if the connection status of the flight terminal relative to the network device is a connected mode, the air interface message is an RRC message. The RRC message is an RRC connection setup message or an RRC connection reconfiguration message.

With reference to the fourteenth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a fifteenth aspect, a flight terminal is provided and includes a processor and an environment monitoring element that are coupled to each other, where

the status monitoring element is configured to measure a flight environment to obtain a status parameter, where the status parameter includes at least one of a height, a quantity of neighboring cells, and a neighboring cell measurement value;

the processor is configured to determine a flight status of the flight terminal based on the status parameter; and

the processor is configured to select, based on the flight status, a target parameter configuration corresponding to the flight status of the flight terminal from a plurality of parameter configurations, where the plurality of parameter configurations include at least a first parameter configuration and a second parameter configuration; and

the processor is configured to configure the flight terminal by using the target parameter configuration.

With reference to the fifteenth aspect, in some possible implementations, the first parameter configuration and the second parameter configuration may be respectively as follows.

The first parameter configuration includes at least one of a first cell selection and reselection parameter, a first tracking area list, a first measurement-related parameter, a first radio link failure parameter, and a first power control parameter.

The first cell selection and reselection parameter includes at least one of a first cell quality value threshold, a first cell received signal value threshold, an offset value of the first cell quality value threshold, an offset value of the first cell received signal value threshold, and a first cell access barring indication.

The first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

The first radio link failure parameter includes a first out-of-synchronization threshold.

The first power control parameter includes at least one of power of a first PDCCH, power of a first PUSH on a subcarrier c, expected receive power of a first base station, and a power control parameter of a first PRACH.

The second parameter configuration includes at least one of a second cell selection and reselection parameter, a second tracking area list, a second measurement-related parameter, a second radio link failure parameter, and a second power control parameter.

The second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, where the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell.

The second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

The second radio link failure parameter includes a second out-of-synchronization threshold.

The second power control parameter includes at least one of power of a second PDCCH, power of a second PUSH on a subcarrier c, expected receive power of a second base station, and a power control parameter of a second PRACH.

With reference to the fifteenth aspect, in some possible implementations, before the flight terminal selects the target parameter configuration from the plurality of parameter configurations based on a flight height, the receiver receives, by using an air interface message, the plurality of parameter configurations sent by the network device.

Specifically, if a connection status of the flight terminal relative to the network device is an idle mode, the air interface message is a broadcast message.

Specifically, if the connection status of the flight terminal relative to the network device is a connected mode, the air interface message is an RRC message. The RRC message is an RRC connection setup message or an RRC connection reconfiguration message.

With reference to the fifteenth aspect, in some possible implementations, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

According to a sixteenth aspect, a computer-readable storage medium is provided, where the computer-readable storage medium stores a computer program, and when the computer program is executed by a processor, the method according to any one of the first aspect to the fifth aspect is implemented.

According to a seventeenth aspect, a computer program product including an instruction is provided, and when the computer program product is run on a computer, the computer is enabled to perform the method according to any one of the first aspect to the fifth aspect.

According to an eighteenth aspect, a communications system includes a network device and a flight terminal, where the network device can communicate with the flight terminal. When the network device is the network device according to the first aspect, the flight terminal is the flight terminal according to the second aspect; when the network device is the network device according to the third aspect, the flight terminal is the flight terminal according to the fourth aspect; or when the network device is the network device according to the fifth aspect.

## BRIEF DESCRIPTION OF DRAWINGS

To describe the technical solutions in the embodiments of the present invention or in the background more clearly, the following briefly describes the accompanying drawings required for describing the embodiments of the present invention or the background.

FIG. 1 is a comparative diagram of a cell coverage area on the ground and a cell coverage area in the air according to an embodiment of this application;
FIG. 2 is a comparative diagram of distribution of neighboring cells on the ground and distribution of neighboring cells in the air according to an embodiment of this application;
FIG. 3 is an interaction diagram of a first parameter configuration selection method according to an embodiment of this application;
FIG. 4 is an interaction diagram of a second parameter configuration selection method according to an embodiment of this application;
FIG. 5 is an interaction diagram of a third parameter configuration selection method according to an embodiment of this application;
FIG. 6 is a schematic structural diagram of a flight terminal according to an embodiment of this application;
FIG. 7 is a schematic structural diagram of a network device according to an embodiment of this application;
FIG. 8A and FIG. 8B are a schematic diagram of collaborative interaction between components of a device described in the embodiment in FIG. 6 and components of a device described in the embodiment in FIG. 7;
FIG. 9 is a schematic diagram of a function module of each device in a communications system according to an embodiment of this application; and
FIG. 10 is a schematic diagram of a function module of each device in another communications system according to an embodiment of this application.

**DESCRIPTION OF EMBODIMENTS**

In embodiments of this application, a flight terminal may be a drone terminal (Drone UE), including a drone such as a UAV (Unmanned Aerial Vehicle), or a drone that carries a conventional ground terminal (terminal) (for example, conventional UE is placed on a drone). The flight terminal is not limited to the drones in the foregoing example. In actual application, the flight terminal may be another flight device, such as an airplane. This is not specifically limited in this application.

It may be understood that the conventional ground terminal may also be referred to as user equipment (User Equipment, UE for short), a mobile station (Mobile Station, MS for short), a mobile terminal (mobile terminal), a subscriber unit (Subscriber Unit, SU for short), a subscriber station (Subscriber Station, SS for short), a mobile station (Mobile Station, MB for short), a remote station (Remote Station, RS for short), an access point (Access Point, AP for short), a remote terminal (Remote Terminal, RT for short), an access terminal (Access Terminal, AT for short), a user terminal (User Terminal, UT for short), a user agent (User Agent, UA for short), a terminal device (User Device, UD for short), or the like. This is not limited in this application. The terminal may be a wireless terminal or a wired terminal. The wireless terminal may be a device that provides voice and/or data connectivity to a user, and may communicate with one or more core networks by using a radio access network (such as a RAN, radio access network).

For ease of understanding, before the embodiments of this application are described, first each processing procedure for a parameter configuration application in the embodiments is separately described in detail.

(I) Processing procedure for cell selection and reselection

A flight terminal searches cells for a target cell. The flight terminal determines, according to a cell selection criterion (S criterion), whether the found target cell is a proper cell. If the target cell is a proper cell, the flight terminal determines to select or reselect the target cell for camping on. If the target cell is not a proper cell, the flight terminal determines not to select or reselect the target cell for camping on. However, if a base station sends a cell access barring (barring) indication to the flight terminal, although the target cell meets the S criterion, the flight terminal does not select or reselect the target cell for camping on, but reselects a proper cell for camping on.

Conditions of the S criterion are as follows:

Srxlev>0 and Squal>0;

$$\text{Srxlev} = Q_{rxlevmeas} - (Q_{rxlevmin} + Q_{rxlevminoffest}) - Pcompensation;$$

and

$$\text{Squal} = Q_{qualmeas} - (Q_{qualmin} + Q_{qualminoffest});$$

where Srxlev represents a cell selection received signal level value, Squal represents a cell selection quality value, $Q_{rxlevmeas}$ represents a cell measurement received signal level value, $Q_{qualmeas}$ represents a cell measurement quality value, $Q_{rxlevmin}$ represents a cell received signal value threshold, $Q_{qualmin}$ represents a cell quality value threshold, $Q_{rxlevminoffest}$ represents an offset value of the cell received signal value threshold, $Q_{qualminoffest}$ represents an offset value of the cell quality value threshold, and Pcompensation represents power compensation. In a specific embodiment, the cell received signal value threshold may be a lowest cell received signal, the cell quality value threshold is a lowest cell quality value, the offset value of the cell received signal value threshold is an offset value of the lowest cell received signal, and the offset value of the cell quality value threshold is an offset value of the lowest cell quality value.

(II) Processing procedure for a tracking area list (tracking area list, TA list) configuration

A flight terminal sends an attach request (attach request) to a base station. After receiving the attach request, the base station forwards the attach request to a core network. After receiving the attach request, and completing procedures such as authentication, security activation, and session establishment between the core network and the flight terminal, the core network sends an attach accept (attach accept) message to the base station. After receiving the attach accept message, the base station forwards the attach accept message to the flight terminal. The attach accept message carries a tracking area list, the tracking area list includes a plurality of tracking areas, and the tracking areas include a plurality of cells that are geographically close.

When the flight terminal enters a cell in the tracking area list, the flight terminal does not need to update the tracking area list, and does not need to instruct the core network to update tracking area information of the flight terminal, either. When the flight terminal enters a cell outside the tracking area list, the flight terminal needs to update the tracking area list, and also needs to instruct the core network to update the tracking area information of the flight terminal. When the flight terminal is paged, the core network pages the flight terminal in only the cell in the tracking area list, but does not page the flight terminal in the cell outside the tracking area list. Therefore, the flight terminal can be paged successfully, a large quantity of flight terminals do not need to update a cell list, and a large quantity of cells do not need to update tracking area information of the flight terminals. In this way, a problem of signaling load is avoided.

(III) Processing procedure for cell measurement

A base station delivers a measurement configuration (measure configuration) to a flight terminal by using an RRC connection reconfiguration (RRC Connection Reconfiguration) message. After receiving the measurement configuration delivered by the base station, the flight terminal performs measurement based on the measurement configuration to obtain a measurement result. When the measurement result meets a measurement reporting condition, the flight terminal fills the measurement result in a measurement report (Measurement Report), and returns the measurement report to the base station. The measurement reporting condition includes: meeting any one of an A1 event, an A2 event, an A3 event, and an A4 event.

A1 event (Serving becomes better than threshold) indicates that inter-frequency/inter-system measurement is stopped when signal quality of a serving cell is higher than a threshold parameter of the A1 event. A trigger condition of the A1 event is:
$Ms1-Hys1>Thersh1$
Ms1 represents a measurement result of the serving cell in the A1 event, Hys1 represents a hysteresis parameter of the A1 event, and Thersh1 represents the threshold parameter of the A1 event.
A2 event (Serving becomes worse than threshold) indicates that inter-frequency/inter-system measurement is started when signal quality of a serving cell is lower than a threshold parameter of the A2 event. A trigger condition of the A2 event is:
$Ms2+Hys2>Thersh2$
Ms2 represents a measurement result of the serving cell in the A2 event, Hys2 represents a hysteresis parameter of the A2 event, and Thersh2 represents the threshold parameter of the A2 event.
A3 event (Neighbour becomes offset better than serving) indicates that an intra-frequency handover request is started when quality of a neighboring cell is higher than quality of a serving cell. A trigger condition of the A3 event is:
$Mn3+Ofn3+Ocn3-Hys3>Ms3+Ofs3+Ocs3+Off3$
Mn3 represents a measurement result of the neighboring cell in the A3 event, Ofn3 represents a specific frequency offset of a neighboring cell frequency of the A3 event, Ocn3 represents a specific cell offset of the neighboring cell in the A3 event, Hys3 represents a hysteresis parameter of the A3 event, Ms3 represents a measurement result of the serving cell in the A3 event, Ofs3 represents a specific frequency offset of a serving cell frequency of the A3 event, Ocs3 represents a specific cell offset of the serving cell in the A3 event, and Off3 represents a cell offset of the A3 event.
A4 event (Neighbour becomes better than threshold) indicates that an inter-frequency handover request is started when quality of a neighboring cell is higher than a threshold parameter of the A4 event. A trigger condition of the A4 event is:
$Mn4+Ofn4+Ocn4-Hys4>Thresh4$
Mn4 represents a measurement result of the neighboring cell in the A4 event, Ofn4 represents a specific frequency offset of a neighboring cell frequency of the A4 event, Ocn4 represents a specific cell offset of the neighboring cell in the A4 event, Hys4 represents a hysteresis parameter of the A4 event, and Thresh4 represents the threshold parameter of the A4 event.

It may be understood that the foregoing measurement is performed in an RRC connected mode. In an RRC idle mode, the flight terminal needs to perform log measurement on a cell recorded in a log measurement area, so that a moving track/status of the flight terminal can be monitored in real time. To save power of the flight terminal, the flight terminal performs log measurement on only the cell recorded in the log measurement area, but does not perform log measurement on a cell other than the cell recorded in the log measurement area.

(IV) Processing procedure for downlink radio link monitoring

A base station sends a cell-specific reference signal (cell specific reference signal, CRS) to a flight terminal. After receiving the cell-specific reference signal sent by the base station, the flight terminal detects the cell-specific reference signal to obtain downlink radio link quality. If the downlink radio link quality is lower than an out-of-synchronization threshold, one time of out-of-synchronization is generated. If the downlink radio link quality is higher than a synchronization threshold, one time of synchronization is generated. The flight terminal counts a quantity of times of consecutive out-of-synchronization. If the quantity of times of consecutive out-of-synchronization reaches a quantity threshold of times of out-of-synchronization, a timer is started. If the flight terminal does not detect at least two times of consecutive synchronization within a timing time of the timer, the flight terminal determines, when timing of the timer ends, that a radio link failure (Radio Link Failure, RLF) occurs.

(V) Processing procedure for uplink power control

A flight terminal calculates transmit power of an uplink physical channel. The uplink physical channel includes a physical uplink control channel (Physical Uplink Control CHannel, PUCCH), a physical uplink shared channel (Physical Uplink Shared Channel, PUSCH), a sounding reference signal (Sounding Reference Signal, SRS), and a physical random access channel (Physical Random Access Channel, PRACH). The flight terminal sends a radio signal on the uplink physical channel at the calculated transmit power. Transmit power of the PUCCH, transmit power of the PUSCH, transmit power of the SRS, and transmit power of the PRACH are respectively as follows.

(1) Transmit power of the PUCCH:

If a serving cell c is a primary cell, the transmit power of the PUCCH is:

$$P_{\text{PUCCH}}(i) = \min \left\{ \begin{array}{l} P_{\text{CMAX},c}(i), \\ P_{0\_\text{PUCCH}} + PL_c + h\left(n_{CQI}, n_{HARQ}, n_{SR}\right) + \Delta_{\text{F\_PUCCH}}\left(F\right) + \Delta_{TxD}(F') + g(i) \end{array} \right\}$$

If UE does not send the PUCCH in the primary cell, the transmit power of the PUCCH is:

$$P_{\text{PUCCH}}(i) = \min \left\{ P_{\text{CMAX},c}(i), P_{0\_\text{PUCCH}} + PL_c + g(i) \right\}$$

$P_{\text{CMAX},c}(i)$ represents maximum transmit power of each subcarrier; $\Delta_{\text{F\_PUCCH}}(F)$ is configured by a higher layer and is related to a PUCCH format; $\Delta_{TxD}(F')$ is configured by the higher layer and is related to ports on which the PUCCH is transmitted; $h(n_{CQI}, n_{HARQ}, n_{SR})$ represents a value related to the PUCCH format; $P_{\text{O\_PUCCH}}$ is obtained by summing up two parameters configured by the higher layer; $\delta_{\text{PUCCH}}$ represents a UE specific value and is fed back to the flight terminal by a network side through a PDCCH; and $g(i) = g(i-1) + \sum_{m=0}^{M-1} \delta_{PUCCH}(i - k_m)$.

(2) Transmit power of the PUSCH:

If the UE does not simultaneously transmit the PUSCH and the PUCCH, the transmit power of the PUSCH is:

$$P_{\text{PUSCH},c}(i) = \min \left\{ \begin{array}{l} P_{\text{CMAX},c}(i), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) \end{array} \right\}$$

If the UE simultaneously transmits the PUSCH and the PUCCH, the transmit power of the PUSCH of the UE is:

$$P_{\text{PUSCH},c}(i) = \min \left\{ \begin{array}{l} 10\log_{10}\left(\hat{P}_{\text{CMAX},c}(i) - \hat{P}_{\text{PUCCH}}(i)\right), \\ 10\log_{10}(M_{\text{PUSCH},c}(i)) + P_{\text{O\_PUSCH},c}(j) + \alpha_c(j) \cdot PL_c + \Delta_{\text{TF},c}(i) + f_c(i) \end{array} \right\}$$

If the UE does not send the PUSCH but receives a TPC command in DCI format 3/3A, the transmit power of the PUSCH is:

$$P_{\text{PUSCH},c}(i) = \min\left\{ P_{\text{CMAX},c}(i),\, P_{\text{O\_PUSCH},c}(1) + \alpha_c(1) \cdot PL_c + f_c(i) \right\}$$

$\hat{P}_{\text{FUCCH}}(i)$ represents the transmit power of the PUCCH; $M_{\text{PUSCH},c}(i)$ represents a quantity of resource blocks (Resource Block, RB) occupied by the PUSCH in one subframe; $P_{\text{O\_PUSCH},c}(j)$ is obtained by summing up two parameters configured by the higher layer; $\alpha_c(j)$ is configured by the higher layer; and $PL_c$ represents a downlink path loss calculated on the flight terminal side. The downlink path loss is equal to reference signal transmit power minus reference signal received power (Reference Signal Receiving Power, RSRP), and the reference signal transmit power is notified by the higher layer to the flight terminal. $\Delta_{TF,c}(i) = 10\log_{10}\left(\left(2^{BPRE \cdot K_s} - 1\right) \cdot \beta_{offset}^{PUSCH}\right)$, where $K_s$ is configured by the higher layer; $\delta_{\text{PUSCH},c}$ represents a valued related to a TPC command indicated by the PDCCH/an EPDCCH, and $f_c(i)$ represents a value related to a higher-layer configuration and $\delta_{\text{PUSCH},c}$.

(3) Transmit power of the SRS:

$$\left\{ P_{\text{CMAX},c}(i),\, P_{\text{SRS\_OFFSET},c}(m) + 10\log_{10}(M_{\text{SRS},c}) + P_{\text{O\_PUSCH},c}(j) + \alpha_c(j) \cdot PL_c + f_c(i) \right\}$$

$P_{\text{SRS\_OFFSET},c}(m)$ represents a semi-static parameter configured by the higher layer; $M_{\text{SRS},c}$ represents a quantity of RBs occupied by the SRS in one subframe; $f_c(i)$ represents power control adjustment of the PUSCH; $P_{\text{O\_PUSCH},c}(j)$ is obtained by summing up two parameters configured by the higher layer; and $\alpha_c(j)$ is configured by the higher layer.

(4) Transmit power of the PRACH:

$$P_{\text{PRACH}} = \min\left\{ P_{\text{CMAX},\, c(i)},\, PREAMBLE\_RECEIVED\_TARGET\_POWER \right\}$$

PREAMBLE RECEIVED TARGET POWER is configured by the higher layer. $PL_c$ represents a downlink path loss calculated on the flight terminal side. The downlink path loss is equal to reference signal transmit power minus reference signal received power, and the reference signal transmit power is notified by the higher layer to the flight terminal.

Corresponding to the processing procedures (I) to (V) of the parameter configuration application, the parameter configuration in the embodiments of this application includes at least one of a cell selection and reselection parameter, a tracking area list (tracking area list, TA list), a measurement-related parameter, a radio link failure parameter, and a power control parameter. The cell selection and reselection parameter corresponds to the processing procedure for cell selection and reselection, the tracking area list corresponds to the processing procedure for the tracking area list configuration, the measurement-related parameter corresponds to the processing procedure for cell measurement, the radio link failure parameter corresponds to the processing procedure for downlink radio link monitoring, and the power control parameter corresponds to the processing procedure for uplink power control.

Specifically, corresponding to (I) processing procedure for cell selection and reselection, the cell selection and reselection parameter includes at least one of the cell received signal value threshold, the cell quality value threshold, the offset value of the cell received signal value threshold, and the offset value of the cell quality value threshold that are recorded in (I) processing procedure for cell selection and reselection.

Corresponding to (II) processing procedure for a tracking area list configuration, the tracking area list is the tracking area list recorded in (II) processing procedure for a tracking area list configuration.

Corresponding to (III) processing procedure for cell measurement, the measurement-related parameter includes at least one of the hysteresis parameter of the A1 event, the threshold parameter of the A1 event, the hysteresis parameter of the A2 event, the threshold parameter of the A2 event, a frequency offset of the A3 event, a cell offset of the A3 event, the hysteresis parameter of the A3 event, an offset of the A3 event, a frequency offset of the A4 event, a cell offset of the A4 event, the hysteresis parameter of the A4 event, the threshold parameter of the A4 event, a maximum cell quantity, a log measurement area, and a time trigger parameter that are recorded in (III) processing procedure for cell measurement.

Corresponding to (IV) processing procedure for downlink radio link monitoring, the radio link failure parameter includes at least the out-of-synchronization threshold recorded in (IV) processing procedure for downlink radio link monitoring.

Corresponding to (V) processing procedure for uplink power control, the power control parameter includes at least one of power of a PDCCH, power of a PUSH on a subcarrier c, expected receive power of a base station, and a power control parameter of a PRACH that are recorded in (V) processing procedure for uplink power control.

It should be noted that the parameter configuration in the embodiments of this application is not limited to the foregoing example parameters, but may further include another parameter. For example, the parameter configuration in the embodiments of this application may further include a public land mobile network (Public Land Mobile Network, PLMN) selection parameter, and the PLMN selection parameter is applied to a processing procedure for PLMN selection. In addition, the cell selection and reselection parameter, the measurement-related parameter, the radio link failure parameter, and the power control parameter that are included in the parameter configuration in the embodiments of this application may not be limited to the foregoing cases. For example, the measurement-related parameter may further include a hysteresis parameter of an A5 event, a first threshold parameter of the A5 event, and a second threshold parameter of the A5 event.

After a characteristic of the flight terminal on the ground and a characteristic of the flight terminal in the air are studied for a long time, a difference between the characteristic of the flight terminal in the air and the characteristic of the flight terminal on the ground is summarized in the embodiments of this application. The characteristic includes a radio propagation characteristic and a behavior characteristic, which are separately described in detail in the following.

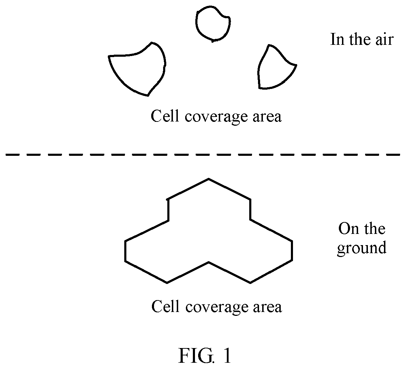

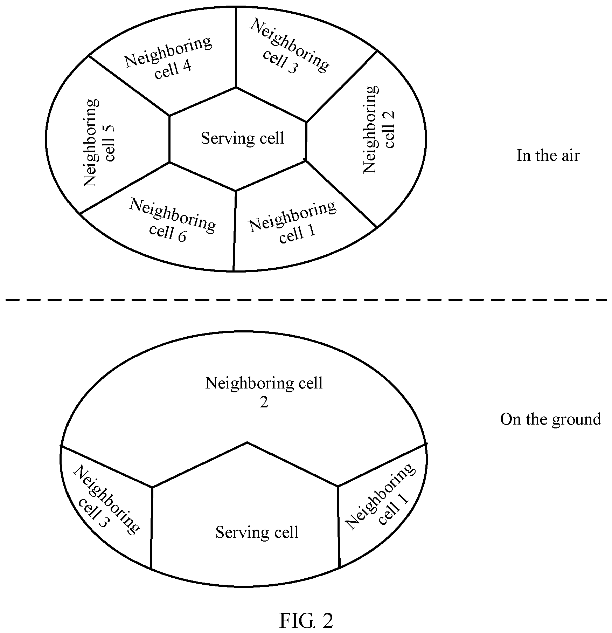

Differences in the radio propagation characteristic include at least the following four aspects: (1) Because there is no obstacle to radio propagation when the flight terminal flies in the air, when signal strength of a radio signal of a serving cell that is received by the flight terminal becomes stronger, signal strength of an interference signal of a neighboring cell also becomes stronger. (2) Because there is no obstacle to radio propagation when the flight terminal flies in the air, the flight terminal causes stronger interference to a terminal device on the ground, such as a smartphone or an internet of things device. (3) A coverage area of a cell of a base station on the ground is shown by a thick line part on the left of FIG. 1, a coverage area of a cell of the base station in the air is shown by a thick line part on the right of FIG. 1, and it may be learned that in the air, the coverage area of the cell is divided into a plurality of noncontiguous blocks, that is, the coverage area of the cell is more fragmented. Therefore, the flight terminal more easily flies away from a contiguous coverage area. (4) Distribution of neighboring cells that can be detected by the flight terminal on the ground is shown in a left circle part in FIG. 2, and distribution of neighboring cells that can be detected in the air is shown in a right circle part in FIG. 2, and it may be learned that in the air, a quantity of neighboring cells of a serving cell significantly increases. Therefore, the flight terminal can measure more cells in the air.

Differences in the behavior characteristic include at least the following three aspects: (1) For ease of management and other reasons, when flying in the air, the flight terminal is barred from accessing some cells. (2) To prevent the flight terminal from photographing a place such as a restricted military area and leaking out a photo by using a network, when flying in the air, the flight terminal should be barred from accessing a network device such as a base station in a no-fly zone. (3) To prevent the flight terminal from colliding with an obstacle on the ground during flight and causing damage to the obstacle on the ground, when flying in the air, the flight terminal is barred from accessing a network device such as a base station when a flight height is lower than a required height.

In an existing parameter configuration solution of a flight terminal, a parameter configuration solution of a common terminal device is used, and a characteristic difference of the flight terminal at different heights is not considered. Consequently, performance of the flight terminal is greatly affected. To resolve this problem, the embodiments of this application provide a parameter configuration selection method, a device, and a system, so as to select a proper parameter configuration based on a flight status of the flight terminal, thereby improving performance of the flight terminal. The following separately provides detailed descriptions.

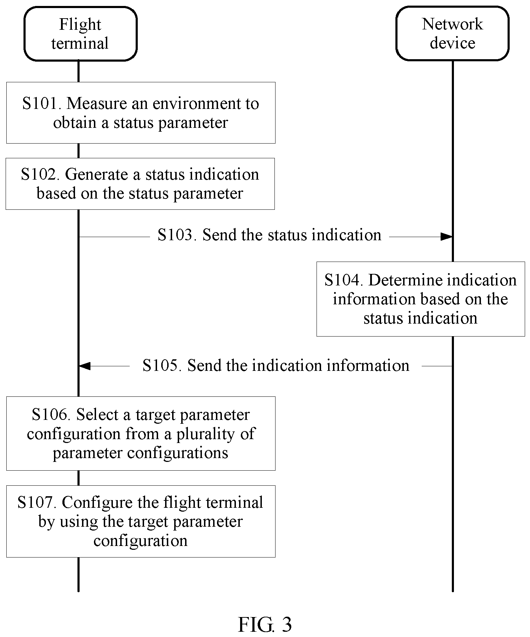

As shown in FIG. 3, an embodiment of this application provides a first parameter configuration selection method. As shown in FIG. 3, parameter configuration selection in this embodiment of this application includes the following steps.

S101. A flight terminal measures an environment to obtain a status parameter.

In this embodiment of this application, the status parameter may be at least one of a height, barometric pressure, gravity acceleration, a quantity of neighboring cells, a neighboring cell measurement value, and a special reference signal. The height may be an absolute height of the flight terminal relative to a horizontal plane, may be a relative height of the flight terminal relative to a reference plane, or may be a height level, for example, low, medium, or high, or may be a value calculated by using a height function. The height function may be implemented by using a product or may be defined in a standard. This is not limited in the present invention. For example, the height may be a height of the flight terminal from the ground, or a height of the flight terminal relative to a base station, or a height of the flight terminal relative to another reference object. Alternatively, the height may be a height level obtained by mapping a height value, for example, low ranges Xm to Ym, medium ranges Ym to Zm, and high ranges Zm to Km. The quantity of neighboring cells may be a quantity of all neighboring cells that can be measured by the flight terminal, or may be a quantity of neighboring cells whose signal strength difference from signal strength of a serving cell is less than a threshold and that are in all neighboring cells that can be measured by the flight terminal, or the like. The neighboring cell measurement value may be signal strength of a neighboring cell of the flight terminal, or may be a difference between signal strength of a neighboring cell of the flight terminal and signal strength of a serving cell, or the like. The special reference signal is a special reference signal defined for the flight terminal in a standard protocol. When the flight terminal is in the air, the special reference signal is sent. When receiving the special reference signal, the base station considers that the flight terminal is in the air.

It may be understood that the status parameter is not limited to the foregoing examples, and the status parameter in this embodiment of this application may be a temperature or the like. This is not specifically limited herein.

In this embodiment of this application, the status parameter may be obtained through measurement by a status monitoring element disposed in the flight terminal. In specific implementation, the status monitoring element may be a laser height measurement module, and the height of the flight terminal can be measured by using a laser transmission time. The status monitoring element may alternatively be a global positioning system (Global Positioning System, GPS) module, and can directly measure the height of the flight terminal by using a satellite. The status monitoring element may alternatively be a barometric pressure measurement module, a gravity acceleration measurement module, or the like, and can detect and obtain barometric pressure or gravity acceleration of the flight terminal. The status monitoring element may alternatively be a signal receiver, and measure a signal of a neighboring cell of the flight terminal, so as to obtain the quantity of neighboring cells and/or the neighboring cell measurement value of the flight terminal.

S102. The flight terminal generates a status indication based on the status parameter.

In this embodiment of this application, the status indication is used to indicate a flight status of the flight terminal. For example, the flight status of the flight terminal means whether the flight terminal is in the air or on the ground. In the air may refer to a height greater than that of a network device (for example, a base station), and on the ground may refer to a height less than that of the network device (for example, the base station). For simplicity, on the ground and in the air are used as examples in the following. The status indication includes at least the following two implementations.

In a first implementation, the status indication is used to carry a status parameter, where the status parameter is at least one of a height, neighboring cell strength, a quantity of neighboring cells, and a special reference signal. That is, the flight terminal generates the status indication based on the status parameter and sends the status indication to the network device. After receiving the status indication sent by the flight terminal, the network device determines, based on the status parameter carried in the status indication, whether the flight terminal is in the air or on the ground.

In a second implementation, the status indication is used to indicate the flight status of the flight terminal. For example, the flight terminal determines, based on the status parameter, whether the flight terminal is in the air or on the ground, and generates the status indication based on a determining result and sends the status indication to the network device. After receiving the status indication sent by the flight terminal, the network device learns, based on the determining result carried in the status indication, whether the flight terminal is in the air or on the ground.

When the second implementation is used for the status indication, the flight terminal may compare the status parameter with a status threshold, so as to determine whether the flight terminal is in the air or on the ground. The status threshold may be sent by the base station to the flight terminal, or may be defined in a standard protocol. This is not limited in the present invention. Specifically, there are at least the following four manners in which the flight terminal compares the status parameter with the status threshold, so as to determine whether the flight terminal is in the air or in the ground:

(1) When the status parameter is the height, the flight terminal receives a height threshold sent by the base station, and the flight terminal compares a measured height value with the height threshold. If the measured height is greater than the height threshold, it is determined that the flight terminal is in the air; or if the measured height is less than or equal to the height threshold, it is determined that the flight terminal is on the ground.

(2) When the status parameter is the barometric pressure and/or the gravity acceleration, the flight terminal receives a barometric pressure threshold and/or a gravity acceleration threshold that are/is sent by the base station, and the flight terminal compares measured barometric pressure and/or gravity acceleration with a corresponding threshold. If the measured barometric pressure and/or gravity acceleration is less than the corresponding threshold, it is determined that the flight terminal is in the air; or if the measured barometric pressure and/or gravity acceleration is greater than or equal to the corresponding threshold, it is determined that the flight terminal is on the ground.

(3) When the status parameter is the neighboring cell strength, the flight terminal receives a neighboring cell strength threshold sent by the base station, and the flight terminal compares measured neighboring cell signal strength with the signal strength of the serving cell. If a difference between the signal strength of the neighboring cell and the signal strength of the serving cell is less than the neighboring cell strength threshold, it is determined that the flight terminal is in the air; or if a difference between the signal strength of the neighboring cell and the signal strength of the serving cell is greater than or equal to the neighboring cell strength threshold, it is determined that the flight terminal is on the ground.

(4) When the status parameter is the quantity of neighboring cells, the flight terminal receives a quantity threshold of neighboring cells that is sent by the base station, and the flight terminal compares a measured quantity of neighboring cells with the quantity threshold of neighboring cells. If the quantity of neighboring cells is greater than the quantity threshold of neighboring cells, it is determined that the flight terminal is in the air; or if the quantity of neighboring cells is less than or equal to the quantity threshold of neighboring cells, it is determined that the flight terminal is on the ground.

It may be understood that, to improve accuracy of determining, the flight terminal may further determine a flight height of the flight terminal by using a trained estimation model. The status parameter is used as input of the estimation model, and the determining result is output of the estimation model. In specific implementation, a large quantity of known status parameters may be used as input, and determining results corresponding to the known status parameters may be used as output to train the estimation model.

S103. The flight terminal sends the status indication to the network device. Correspondingly, the network device receives the status indication sent by the flight terminal.

S104. The network device determines indication information based on the status indication.

S105. The network device sends the indication information to the flight terminal. Correspondingly, the flight terminal receives the indication information sent by the network device. The indication information is used to indicate a target parameter configuration to which the flight terminal is to be switched, and the target parameter configuration is a first parameter configuration or a second parameter configuration. For example, when the status indication is used to indicate that the flight terminal is on the ground, the indication information is used to indicate that the target parameter configuration to which the flight terminal is to be switched is the first parameter configuration. When the status indication is used to indicate that the flight terminal is in the air, the indication information is used to indicate that the target parameter configuration to which the flight terminal is to be switched is the second parameter configuration.

S106. The flight terminal selects the target parameter configuration from a plurality of parameter configurations according to the indication information.

In this embodiment of this application, before the network device sends the indication information to the flight terminal, the network device sends the plurality of parameter configurations to the flight terminal by using a first air interface message. After the network device sends the plurality of parameter configurations to the flight terminal, the network device sends the indication information to the flight terminal by using second air interface signaling.

In this embodiment of this application, if a connection status of the flight terminal relative to the network device is an idle mode, the first air interface message is a first broadcast message. If the connection status of the flight terminal relative to the network device is a connected mode, the first air interface message is a first RRC message. The first RRC message is a first RRC connection setup message or a first RRC connection reconfiguration message. It may be understood that the first air interface message is not limited to the foregoing example. In another embodiment, the first air interface message may alternatively be another message. This is not specifically limited herein.

In this embodiment of this application, if a connection status of the flight terminal relative to the network device is an idle mode, the second air interface message is a second broadcast message. If the connection status of the flight terminal relative to the network device is a connected mode, the second air interface message is a second RRC message. The second RRC message is a second RRC connection setup message or a second RRC connection reconfiguration message. It may be understood that the second air interface message is not limited to the foregoing example. In another embodiment, the second air interface message may alternatively be another message. This is not specifically limited herein.

In this embodiment of this application, before the flight terminal randomly accesses the network device, the connection status of the flight terminal relative to the network device is an idle mode (RRC_IDLE). After a random access process, the connection status of the flight terminal relative to the network device is changed from the idle mode (RRC_IDLE) to a connected mode (RRC_CONNECTED).

S107. The flight terminal configures the flight terminal by using the target parameter configuration.

In a specific embodiment, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air. The following separately describes the ground parameter configuration and the air parameter configuration in detail.

(1) The ground parameter configuration includes at least one of a first cell selection and reselection parameter, a first tracking area list, a first measurement-related parameter, a first radio link failure parameter, and a first power control parameter.

Specifically, the first cell selection and reselection parameter includes at least one of a first cell quality value threshold, a first cell received signal value threshold, an offset value of the first cell quality value threshold, an offset value of the first cell received signal value threshold, and a first cell access barring indication.

Specifically, the first measurement-related parameter includes at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter.

Specifically, the first radio link failure parameter includes a first out-of-synchronization threshold.

Specifically, the first power control parameter includes at least one of power of a first PDCCH, power of a first PUSH on a subcarrier c, expected receive power of a first base station, and a power control parameter of a first PRACH.

(2) The air parameter configuration includes at least one of a second cell selection and reselection parameter, a second tracking area list, a second measurement-related parameter, a second radio link failure parameter, and a second power control parameter.

Specifically, the second cell selection and reselection parameter includes at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly area access barring indication.

Specifically, the second measurement-related parameter includes at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter.

Specifically, the second radio link failure parameter includes a second out-of-synchronization threshold.

Specifically, the second power control parameter includes at least one of power of a second PDCCH, power of a second PUSH on a subcarrier c, expected receive power of a second base station, and a power control parameter of a second PRACH.

To facilitate comparison between the ground parameter configuration and the air parameter configuration, the following shows a table of comparison between the ground parameter configuration and the air parameter configuration, as shown in Table 1.

**Table 1 Table of comparison between the ground parameter configuration and the air parameter configuration**

| Ground parameter configuration | | Air parameter configuration | |
|---|---|---|---|
| First cell selection and reselection parameter | First cell quality value threshold | Second cell selection and reselection parameter | Second cell quality value threshold |
| | First cell received signal value threshold | | Second cell received signal value threshold |
| | Offset value of the first cell quality value threshold | | Offset value of the second cell quality value threshold |
| | Offset value of the first cell received signal value threshold | | Offset value of the second cell received signal value threshold |
| | First cell access barring indication | | Second cell access barring indication |
| | | | Access signal-to-noise ratio threshold |
| | | | Offset value of the access signal-to-noise ratio threshold |
| | | | Cell frequency priority |
| | | | Height access barring indication |
| | | | No-fly zone access barring indication |

(continued)

| Ground parameter configuration | | Air parameter configuration | |
|---|---|---|---|
| First tracking area list | | Second tracking area list | |
| First measurem ent-related parameter | Hysteresis parameter of the first A1 event | Second measureme nt-related parameter | Hysteresis parameter of the second A1 event |
| | Threshold parameter of the first A1 event | | Threshold parameter of the second A1 event |
| | Hysteresis parameter of the first A2 event | | Hysteresis parameter of the second A2 event |
| | Threshold parameter of the first A2 event | | Threshold parameter of the second A2 event |
| | Frequency offset of the first A3 event | | Frequency offset of the second A3 event |
| | Cell offset of the first A3 event | | Cell offset of the second A3 event |
| | Hysteresis parameter of the first A3 event | | Hysteresis parameter of the second A3 event |
| | Offset of the first A3 event | | Offset of the second A3 event |
| | Frequency offset of the first A4 event | | Frequency offset of the second A4 event |
| | Cell offset of the first A4 event | | Cell offset of the second A4 event |
| | Hysteresis parameter of the first A4 event | | Hysteresis parameter of the second A4 event |
| | Threshold parameter of the first A4 event | | Threshold parameter of the second A4 event |
| | First maximum cell | | Second maximum cell |
| | quantity | | quantity |
| | First log measurement area | | Second log measurement area |
| | First time trigger parameter | | Second time trigger parameter |
| First radio link failure parameter | First out-of-synchronization threshold | Second radio link failure parameter | Second out-of-synchronization threshold |
| First power control parameter | Power of the first PDCCH | Second power control parameter | Power of the second PDCCH |
| | Power of the first PUSH on the subcarrier c | | Power of the second PUSH on the subcarrier c |
| | Expected receive power of the first base station | | Expected receive power of the second base station |
| | Power control parameter of the first PRACH | | Power control parameter of the second PRACH |

By comparing the air parameter configuration with the ground parameter configuration, it can be found that the air parameter configuration differs from the ground parameter configuration in the following aspects.

(1) For the cell selection and reselection parameter

A. In the air parameter configuration, the cell quality value threshold, the cell received signal value threshold, the offset value of the cell quality value threshold, and the offset value of the cell received signal value threshold are modified, and the access signal-to-noise ratio threshold and the offset value of the access signal-to-noise ratio threshold are added. The access signal-to-noise ratio threshold is a signal-to-noise ratio threshold at which the flight terminal is allowed to access a cell, and the offset value of the access signal-to-noise ratio threshold is an offset value of the signal-to-noise ratio threshold at which the flight terminal is allowed to access a cell.

As described above, when the signal strength of the radio signal of the serving cell that is received by the flight terminal becomes stronger, the signal strength of the interference signal of the neighboring cell also becomes stronger, that is, there is a cell having both high signal strength and strong signal interference. Therefore, in the air parameter configuration, the cell quality value threshold, the cell received signal value threshold, the offset value of the cell quality value threshold, and the offset value of the cell received signal value threshold are modified. In addition, the access signal-to-noise ratio threshold and the offset value of the access signal-to-noise ratio threshold are added, so as to ensure that the flight terminal can select an optimal cell for camping on when executing a new S criterion to select a proper cell for camping on. Conditions of the new S criterion are as follows:

Srxlev>0 and Squal>0;

$$Srxlev = Q_{rxlevmeas} - (Q_{rxlevmin} + Q_{rxlevminoffest}) - Pcompensation;$$

$$Squal = Q_{qualmeas} - (Q_{qualmin} + Q_{qualminoffest});$$

and

$$S_{SINR} = Q_{SINRmeas} - (Q_{SINRmin} + Q_{SINRminoffest});$$

where Srxlev represents a cell selection received signal level value, Squal represents a cell selection quality value, $S_{SINR}$ represents a cell selection signal-to-noise ratio, $Q_{rxlevmeas}$ represents a cell measurement received signal level value, $Q_{qualmeas}$ represents a cell measurement quality value, $Q_{SINRmeas}$ represents a cell measurement signal-to-noise ratio, $Q_{rxlevmin}$ represents a cell received signal value threshold, $Q_{qualmin}$ represents a cell quality value threshold, $Q_{SINRmin}$ represents an access signal-to-noise ratio threshold, $Q_{rxlevminoffest}$ represents an offset value of the cell received signal value threshold, $Q_{qualminoffest}$ represents an offset value of the cell quality value threshold, $Q_{SINRminoffest}$ represents an offset value of the access signal-to-noise ratio threshold, and Pcompensation represents power compensation.

B. In the air parameter configuration, the cell access barring indication is modified, and the no-fly zone access barring indication and the height access barring indication are added. The no-fly zone access barring indication is used to indicate that a flight terminal in a no-fly zone is barred from accessing a cell, and the height access barring indication is used to indicate that a flight terminal that exceeds a height threshold is barred from accessing a cell.

As described above, when the flight terminal flies in the air, a flight terminal of a flight type is barred from accessing some cells. In addition, in the no-fly zone, the flight terminal should be barred from accessing the network device, and the flight terminal is also barred from accessing the network device when the flight height of the flight terminal is lower than a required height. Therefore, in the air parameter configuration, a value of the cell access barring indication is modified, so that the cell access barring indication can be further used to indicate access barring of the flight terminal. In addition, the no-fly zone access barring indication and the height access barring indication are further added to the air parameter configuration, so that in the no-fly zone, the flight terminal should be barred from accessing the network device, and the flight terminal is also barred from accessing the network device when the flight height of the flight terminal is lower than the required height.

C. The cell frequency priority is added to the air parameter configuration. The cell frequency priority is used to indicate respective cell access priorities corresponding to different cell frequencies when the flight terminal selects or reselects a cell.

It may be understood that working frequencies of some cells are relatively suitable for access by the flight terminal. Therefore, the cell frequency priority may be further added to the air parameter configuration, so that the flight terminal can preferably select a cell with a proper frequency for access.

(2) For the tracking area list

The tracking area list is modified in the air parameter configuration.

As described above, in the air, the coverage area of the cell is divided into a plurality of noncontiguous blocks, that is, the coverage area of the cell is more fragmented. In addition, the flight terminal can measure more cells in the air. Therefore, the flight terminal can measure more tracking areas. In this case, the tracking area list needs to be modified to accommodate more tracking areas.

(3) For the measurement-related parameter

A. The hysteresis parameter of the A1 event, the threshold parameter of the A1 event, the hysteresis parameter of the A2 event, the threshold parameter of the A2 event, the frequency offset of the A3 event, the cell offset of the A3 event, the hysteresis parameter of the A3 event, the offset of the A3 event, the frequency offset of the A4 event, the cell offset of the A4 event, the hysteresis parameter of the A4 event, the threshold parameter of the A4 event, and the time trigger parameter are modified in the air parameter configuration.

As described above, in the air, the coverage area of the cell is divided into a plurality of noncontiguous blocks, that is, the coverage area of the cell is more fragmented. The flight terminal more easily flies away from a contiguous coverage area, and more easily triggers the A1 event, the A2 event, the A3 event, and the A4 event. Therefore, the hysteresis parameter of the A1 event, the threshold parameter of the A1 event, the hysteresis parameter of the A2 event, the threshold parameter of the A2 event, the frequency offset of the A3 event, the cell offset of the A3 event, the hysteresis parameter of the A3 event, the offset of the A3 event, the frequency offset of the A4 event, the cell offset of the A4 event, the hysteresis parameter of the A4 event, the threshold parameter of the A4 event, the time trigger parameter, and the like need to be modified, so as to avoid frequently triggering the A1 event, the A2 event, the A3 event, and the A4 event.

B. A maximum quantity of reporting cells is modified in the air parameter configuration.

As described above, the flight terminal can measure more cells in the air. Therefore, the maximum quantity of reporting cells needs to be modified in the air parameter configuration to report measurement results of more cells, so as to ensure integrity of measured cells and avoid a handover failure.

C. The log measurement area is modified in the air parameter configuration.

As described above, the flight terminal can measure more cells in the air. Correspondingly, a quantity of areas in which the flight terminal needs to perform log measurement increases correspondingly. Therefore, the log measurement area needs to be modified in the air parameter configuration, so as to ensure more precise monitoring of the flight terminal.

(4) For the radio link failure parameter

The out-of-synchronization threshold is modified in the air parameter configuration.

As described above, radio signal interference to the flight terminal is relatively strong, and a radio link failure easily occurs. Once the radio link failure occurs, data transmission is interrupted, and a data throughput is reduced. Therefore, to reduce a probability of the radio link failure, the out-of-synchronization threshold in the radio link failure parameter needs to be modified.

(5) For the power control parameter

The power of the PDCCH, the power of the PUSH on the subcarrier c, the expected receive power of the base station, and the power control parameter of the PRACH are modified in the air parameter configuration.

As described above, when the flight terminal flies in the air, there is no obstacle to radio propagation, and interference to the terminal device on the ground is increased. Therefore, the power of the PDCCH, the power of the PUSH on the subcarrier c, the expected receive power of the base station, and a value of the power control parameter of the PRACH in the air parameter configuration need to be modified, so as to reduce interference to the terminal device on the ground.

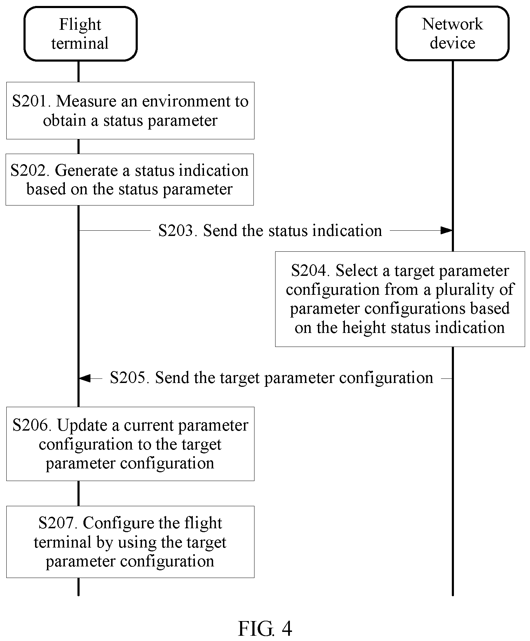

As shown in FIG. 4, an embodiment of this application provides a second parameter configuration selection method. As shown in FIG. 4, parameter configuration selection in this embodiment of this application includes the following steps.

S201. A flight terminal measures an environment to obtain a status parameter.

S202. The flight terminal generates a status indication based on the status parameter.

S203. The flight terminal sends the status indication to a network device. Correspondingly, the network device receives the status indication sent by the flight terminal. The status indication is used to indicate a flight status of the flight terminal.

S204. The network device selects a target parameter configuration from a plurality of parameter configurations based on the status indication. The plurality of parameter configurations include at least a first parameter configuration and a second parameter configuration.

S205. The network device sends the target parameter configuration to the flight terminal. Correspondingly, the flight terminal receives the target parameter configuration sent by the network device.

In this embodiment of this application, the target parameter configuration is carried in an air interface message. If a connection status of the flight terminal relative to the network device is an idle mode, the air interface message is a broadcast message. If the connection status of the flight terminal relative to the network device is a connected mode, the air interface message is an RRC message. The RRC message is an RRC connection setup message or an RRC connection reconfiguration message.

S206. The flight terminal updates a current parameter configuration to the target parameter configuration.

S207. The flight terminal configures the flight terminal by using the target parameter configuration.

It can be learned that a difference between the embodiment shown in FIG. 4 and the embodiment shown in FIG. 3 lies in that in the embodiment shown in FIG. 4, the network device sends the target parameter configuration to the flight terminal, and after receiving the target parameter configuration, the flight terminal updates the current configuration to the target parameter configuration. In the embodiment shown in FIG. 3, the network device sends indication information to the flight terminal; and after receiving the indication information, the flight terminal selects the target parameter configuration according to the indication information, and then updates the current configuration to the target parameter configuration. For other content, refer to the embodiment and the related description shown in FIG. 3. Details are not described herein.

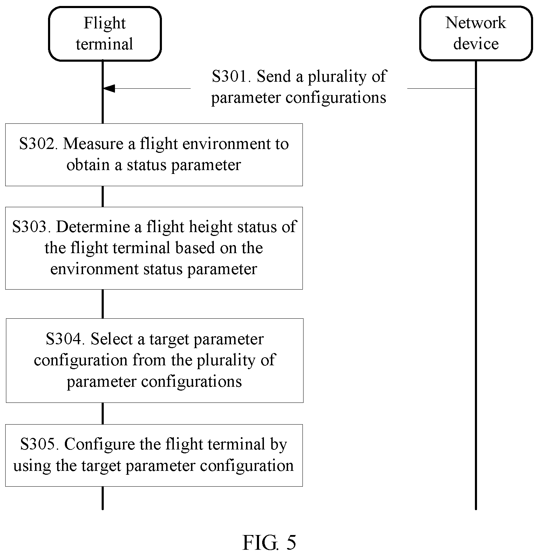

As shown in FIG. 5, an embodiment of this application provides a third parameter configuration selection method. As shown in FIG. 5, parameter configuration selection in this embodiment of this application includes the following steps.

S301. A network device sends the plurality of parameter configurations to a flight terminal by using an air interface message. Correspondingly, the flight terminal receives, by using air interface information, the plurality of parameter configurations sent by the network device.

In this embodiment of this application, if a connection status of the flight terminal relative to the network device is an idle mode, the air interface message is a broadcast message. If the connection status of the flight terminal relative to the network device is a connected mode, the air interface message is an RRC message. The RRC message is an RRC connection setup message or an RRC connection reconfiguration message.

S302. The flight terminal measures a flight environment to obtain a status parameter, where the status parameter includes at least one of a height, a quantity of neighboring cells, and a neighboring cell measurement value.

S303. The flight terminal determines a flight status of the flight terminal based on the status parameter.

S304. The flight terminal selects a target parameter configuration from the plurality of parameter configurations based on the flight status, where the plurality of parameter configurations include at least a first parameter configuration and a second parameter configuration.

S305. The flight terminal configures the flight terminal by using the target parameter configuration.

It can be learned that a difference between the embodiment shown in FIG. 5 and the embodiments shown in FIG. 3 and FIG. 4 lies in that the flight terminal determines the flight status of the flight terminal by using the status parameter, and selects the target parameter configuration from the plurality of parameter configurations based on the flight status. That is, in the embodiment shown in FIG. 5, the network device does not need to participate in a process of selecting the target parameter configuration. For other content, refer to the embodiment and the related description shown in FIG. 3. Details are not described herein.

It should be noted that, in the foregoing examples of FIG. 3 to FIG. 5, the flight status of the flight terminal is classified into on the ground and in the air. When the flight status of the flight terminal is on the ground, the selected target parameter configuration is the first parameter configuration. When the flight status of the flight terminal is in the air, the selected target parameter configuration is the second parameter configuration. However, in an actual application, the flight status of the flight terminal may be further classified into on the ground, in the air, and high in the sky. When the flight status of the flight terminal is on the ground, the selected target parameter configuration is the first parameter configuration. When the flight status of the flight terminal is in the air, the selected target parameter configuration is the second parameter configuration. When the flight status of the flight terminal is high in the sky, the selected target parameter configuration is a third parameter configuration. It may be understood that the flight status of the flight terminal may be further classified into more levels. This is not specifically limited in the present invention.

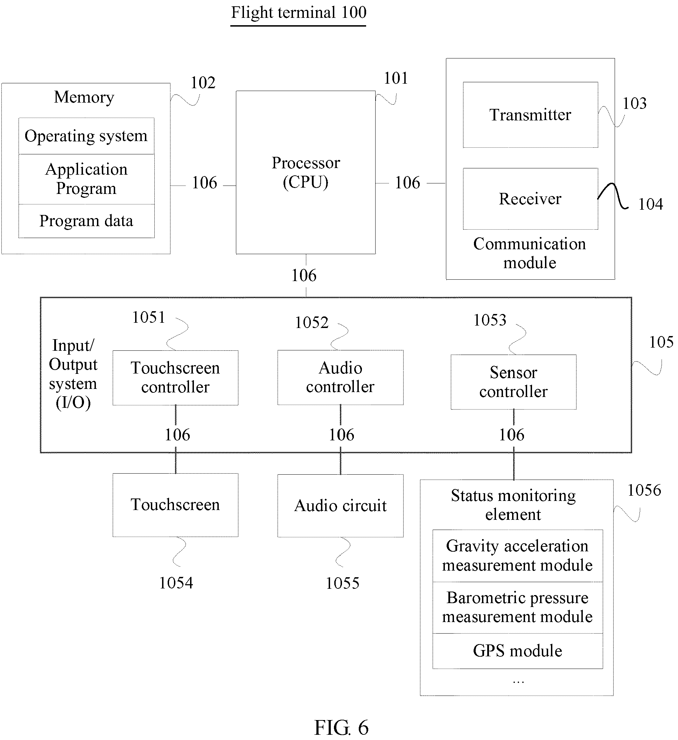

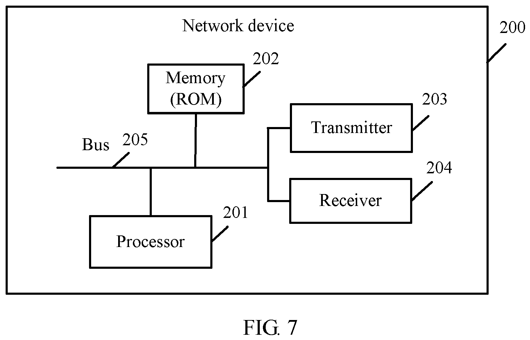

The following describes the flight terminal and the network device that are provided in the embodiments of this application, which may be respectively a flight terminal 100 and a network device 200 shown in FIG. 6 and FIG. 7.

As shown in FIG. 6, an embodiment of this application further provides the flight terminal 100. The flight terminal 100 in this embodiment of this application includes at least a processor 101, a memory 102 (one or more computer-readable storage media), a transmitter 103, a receiver 104, and an input/output system 105. These components may communicate with each other by using one or more communications buses 106.

The input/output system 105 is mainly configured to implement a function of interaction between the flight terminal 100 and an external environment. In specific implementation, the input/output system 105 may include a sensor controller 1053. The sensor controller 1053 may be coupled to a status monitoring element 1056. The status monitoring element 1056 is configured to detect a flight status of the flight terminal to obtain a status parameter, such as a height, barometric pressure, gravity acceleration, a quantity of neighboring cells, and a neighboring cell measurement value. In specific implementation, the status monitoring element 1056 may be a laser height measurement module, and can measure the height of the flight terminal by using a laser transmission time. The status monitoring element 1056 may alternatively be a global positioning system module, and can directly measure the height of the flight terminal by using a satellite. The status monitoring element 1056 may alternatively be a barometric pressure measurement module, a gravity acceleration measurement module, or the like, and can detect and obtain the barometric pressure or the gravity acceleration of the flight terminal. The status monitoring element 1056 may alternatively be a signal receiver, and measure a signal of a neighboring cell of the flight terminal, so as to obtain the quantity of neighboring cells and/or the neighboring cell measurement value of the flight terminal. Not limited to the foregoing examples, the status monitoring element 1051 may alternatively be another module, such as a temperature detection module. This is not specifically limited in this application. Optionally, the input/output system 105 may further include a touchscreen controller 1051 and an audio controller 1052, and each controller may be coupled to a corresponding peripheral (a touchscreen 1054 or an audio circuit 1055).

The processor 101 may include one or more CPUs, a clock module, and a power management module through integration. The clock module is mainly configured to generate a clock required for data transmission and time sequence control for the processor 101. The power management module is mainly configured to provide a stable and highly accurate voltage for the processor 101, the transmitter 103, the receiver 104, the status monitoring element 105, and the like.

The memory 102 is coupled to the processor 101 and configured to store various software programs and/or a plurality of sets of instructions. In specific implementation, the memory 102 may include a high-speed random access memory, or may include a nonvolatile memory, such as one or more magnetic disk storage devices, a flash storage device, or another nonvolatile solid-state storage device. The memory 102 may store an operating system (referred to as a system in the following), for example, an embedded operating system such as Android, iOS, Windows, or Linux. The memory 102 may further store the status parameter detected by the status monitoring element, such as the height, the barometric pressure, the gravity acceleration, the quantity of neighboring cells, and the neighboring cell measurement value. The memory 102 may be further configured to store the status parameter detected by the status monitoring element 105, and configured to store a plurality of parameter configurations or a target parameter configuration sent by a network device, so as to configure the flight terminal, so that the flight terminal works in a proper state.

The transmitter 103 and the receiver 104 are separately configured to send and receive a radio frequency signal. That is, the transmitter 103 communicates with a communications network and another communications device by using the radio frequency signal, and the receiver 104 communicates with a communications network and another communications device by using the radio frequency signal. The transmitter 103 and the receiver 104 may be separately disposed, or may be disposed integrally. When the transmitter 103 and the receiver 104 are disposed integrally, the transmitter 103 and the receiver 104 may be referred to as a communications module, a transceiver, a radio frequency module, or the like. In specific implementation, both the transmitter 103 and the receiver 104 may use a single antenna, dual antennas, an antenna array, or the like, so as to constitute a plurality of implementation forms such as a single-input single-output (simple input simple output, SISO), a single-input multiple-output (simple input multiple output, SIMO), a multiple-input-single-output (multiple input simple output, MISO), and a multiple-input multiple-output (multiple input multiple output, MIMO).

As shown in FIG. 7, an embodiment of this application further provides the network device 200. The network device 200 in this embodiment of this application includes at least a processor 201, a memory 202 (one or more computer-readable storage media), a transmitter 203, and a receiver 204. These components may communicate with each other by using one or more communications buses 205.

The processor 201 has a powerful operation capability and can quickly perform an operation. The processor 201 performs various functions and data processing of the network device 200 by running or executing a software program and/or a module that are/is stored in the memory 202 and by invoking data stored in the memory 202, to perform overall monitoring on the network device 200.

The memory 202 is coupled to the processor 201 and configured to store various software programs and/or a plurality of sets of instructions. In specific implementation, the memory 202 may include a high-speed random access memory, or may include a nonvolatile memory, such as one or more magnetic disk storage devices, a flash storage device, or another nonvolatile solid-state storage device. The memory 202 may further store a status parameter sent by a flight terminal, such as a height, barometric pressure, gravity acceleration, a quantity of neighboring cells, and a neighboring cell measurement value. The memory 202 may be further configured to store a plurality of parameter configurations, where the parameter configuration may be used to configure the flight terminal, so that the flight terminal works in a proper state.

The transmitter 203 and the receiver 204 are separately configured to send and receive a radio frequency signal. That is, the transmitter 103 communicates with a communications network and another communications device by using the radio frequency signal, and the receiver 104 communicates with a communications network and another communications device by using the radio frequency signal. The transmitter 103 and the receiver 104 may be separately disposed, or may be disposed integrally. When the transmitter 103 and the receiver 104 are disposed integrally, the transmitter 103 and the receiver 104 may be referred to as a communications module, a transceiver, a radio frequency module, or the like. In specific implementation, both the transmitter 103 and the receiver 104 may use a single antenna, dual antennas, an antenna array, or the like, so as to constitute a plurality of implementation forms such as a single-input single-output (simple input simple output, SISO), a single-input multiple-output (simple input multiple output, SIMO), a multiple-input-single-output (multiple input simple output, MISO), and a multiple-input multiple-output (multiple input multiple output, MIMO).

It may be understood that the flight terminal 100 shown in FIG. 6 may be the flight terminal in all the foregoing method embodiments, and the network device 200 shown in FIG. 7 may be the network device in all the foregoing method embodiments. The following uses the embodiment in FIG. 3 as an example to describe in detail a collaboration relationship between components in the flight terminal 100 and components in the network device 200 in the embodiments of this application.

1. The status monitoring element 1056 measures an environment to obtain a status parameter. The status parameter may be at least one of a height, barometric pressure, gravity acceleration, a quantity of neighboring cells, a neighboring cell measurement value, and a special reference signal. For content of obtaining the status parameter by the status monitoring element 1056, refer to the description of the related content in the embodiment shown in FIG. 3. Details are not described herein.

2. The status monitoring element 1056 sends the status parameter to the processor 101. Correspondingly, the processor 101 receives the status parameter sent by the status monitoring element 1056 to the processor 101.

3. The processor 101 generates a status indication based on the status parameter. The status indication may be used to carry the status parameter, or used to indicate a flight status of the flight terminal, for example, indicate whether the flight terminal is on the ground or in the air. For related content of the status indication, refer to the description of the related content in the embodiment shown in FIG. 3. Details are not described herein.

4. The processor 101 sends the status indication to the transmitter 103. Correspondingly, the transmitter 103 receives the status indication sent by the processor 101.

5. The transmitter 103 sends the status indication to the receiver 204. Correspondingly, the receiver 204 receives the status indication sent by the transmitter 103.

6. The receiver 204 sends the status indication to the processor 201. Correspondingly, the processor 201 receives the status indication sent by the receiver 204.

7. The processor 201 determines indication information based on the status indication. The indication information is used to indicate a target parameter configuration to which the flight terminal is to be switched, and the target parameter configuration is a first parameter configuration or a second parameter configuration. For related content of the indication information, refer to the description of the related content in the embodiment shown in FIG. 3. Details are not described herein.

8. The processor 201 sends the indication information to the transmitter 203. Correspondingly, the transmitter 203 receives the indication information sent by the processor 201.

9. The transmitter 203 sends the indication information to the receiver 104. Correspondingly, the receiver 104 receives the indication information sent by the transmitter 203.

10. The receiver 104 sends the indication information to the processor 101. Correspondingly, the processor 101 receives the indication information sent by the receiver 104.

11. The processor 101 selects the target parameter configuration from a plurality of parameter configurations according to the indication information. For example, when the status indication is used to indicate that the flight terminal is on the ground, the indication information is used to indicate that the target parameter configuration to which the flight terminal is to be switched is the first parameter configuration. When the status indication is used to indicate that the flight terminal is in the air, the indication information is used to indicate that the target parameter configuration to which the flight terminal is to be switched is the second parameter configuration. In a specific embodiment, the first parameter configuration is a ground parameter configuration, and the second parameter configuration is an air parameter configuration. The ground parameter configuration is a parameter configuration that is set based on a characteristic of the flight terminal on the ground, and the air parameter configuration is a parameter configuration that is set based on a characteristic of the flight terminal in the air.

12. The processor 101 configures the flight terminal by using the target parameter configuration.

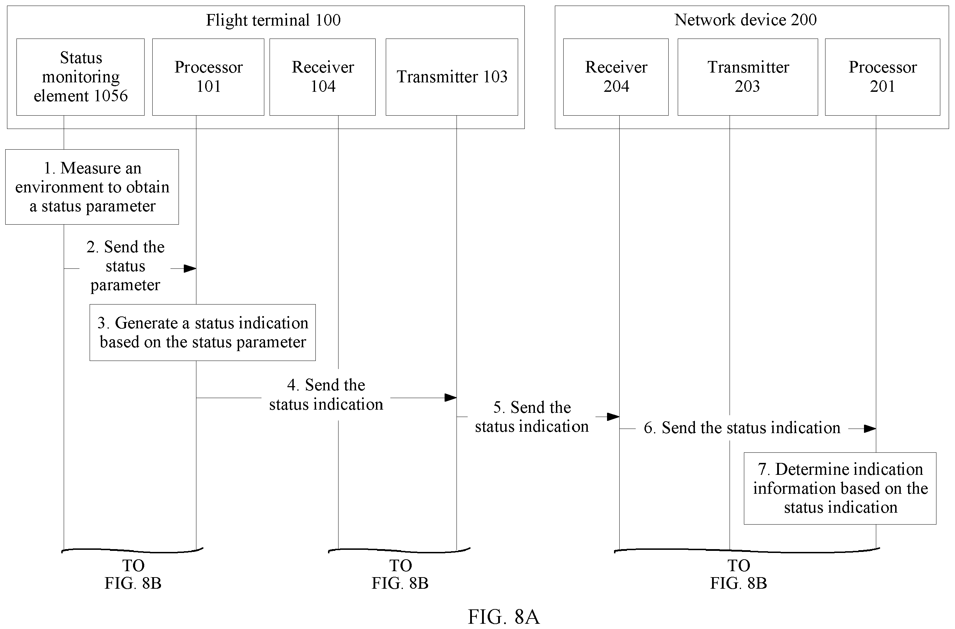

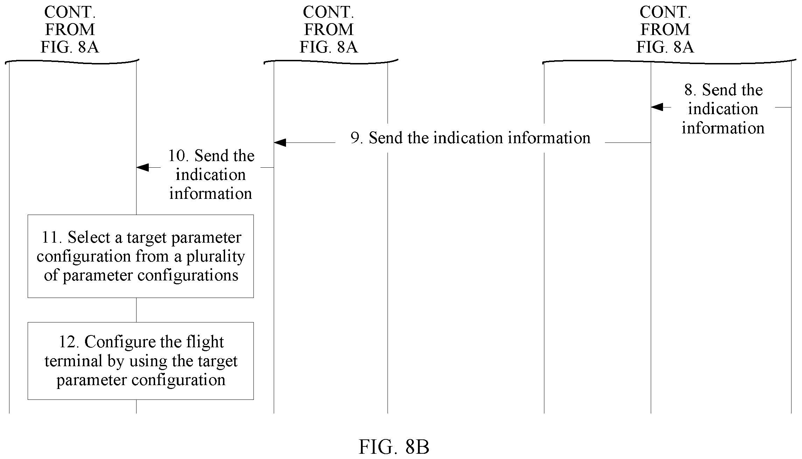

It may be understood that for content not mentioned in the embodiment in FIG. 8A and FIG. 8B and specific implementation of each step, refer to the embodiment in FIG. 3. Details are not described herein. The embodiments shown in FIG. 4 and FIG. 5 are roughly similar to the embodiment shown in FIG. 3, and are not described in detail herein.

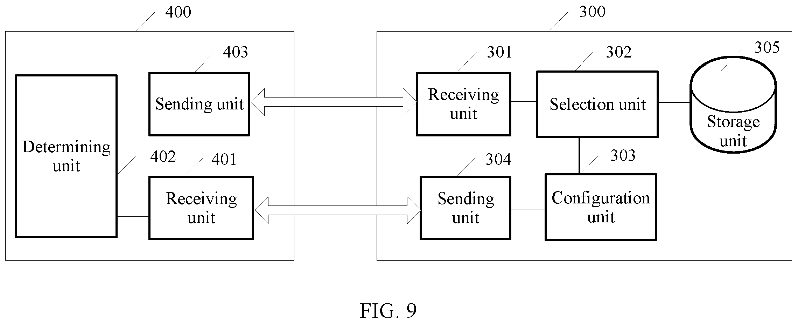

FIG. 9 shows an embodiment of a flight terminal and a network device according to an embodiment of the present invention, and is a schematic structural diagram of a communications system that includes the flight terminal and the network device. As shown in FIG. 9, a communication connection, for example, a radio frequency connection, may exist between a flight terminal 300 and a network device 400, so as to implement data communication between the flight terminal 300 and the network device 400. Details are described below.

As shown in FIG. 9, the flight terminal 300 in this embodiment of this application includes a receiving unit 301, a selection unit 302, a configuration unit 303, a sending unit 304, and a storage unit 305.

The receiving unit 301 is configured to receive indication information sent by the network device, where the indication information is used to indicate an identifier of a target parameter configuration to which the flight terminal is to be switched;

the selection unit 302 is configured to select, according to the indication information, a parameter configuration corresponding to the identifier from a plurality of parameter configurations stored in the storage unit 304, as the target parameter configuration, where the plurality of parameter configurations include at least a first parameter configuration and a second parameter configuration; and

the configuration unit 303 is configured to configure the flight terminal by using the target parameter configuration.

As shown in FIG. 9, the network device 400 in this embodiment of this application includes a receiving unit 401, a determining unit 402, and a sending unit 403.

The receiving unit 401 is configured to receive a status indication sent by the flight terminal, where the status indication is used to indicate a flight status of the flight terminal;

the determining unit 402 is configured to determine indication information based on the status indication, where the indication information is used to indicate a target parameter configuration to which the flight terminal is to be switched, and the target parameter configuration is a first parameter configuration or a second parameter configuration; and

the sending unit 403 is configured to send the indication information to the flight terminal.

It may be understood that for content not mentioned in the embodiment in FIG. 9 and specific implementation of each function unit, refer to the embodiment in FIG. 3. Details are not described herein.

FIG. 9 shows an embodiment of a flight terminal and a network device according to an embodiment of the present invention, and is a schematic structural diagram of a communications system that includes the flight terminal and the network device. As shown in FIG. 9, a communication connection, for example, a radio frequency connection, may exist between a flight terminal 300 and a network device 400, so as to implement data communication between the flight terminal 300 and the network device 400. Details are described below.

FIG. 9 shows an embodiment of a flight terminal and a network device according to an embodiment of the present invention, and is a schematic structural diagram of a communications system that includes the flight terminal and the network device. As shown in FIG. 9, a communication connection, for example, a radio frequency connection, may exist between a flight terminal 300 and a network device 400, so as to implement data communication between the flight terminal 300 and the network device 400. Details are described below.

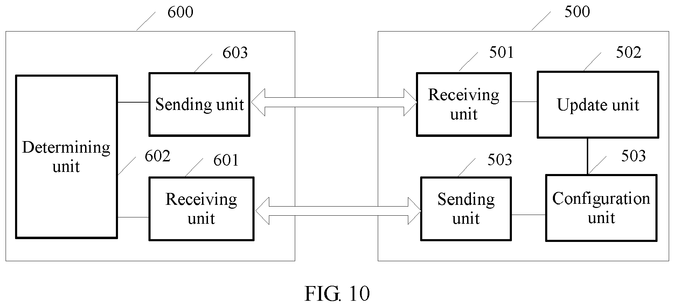

As shown in FIG. 10, a flight terminal 500 in an embodiment of this application includes a receiving unit 501, an update unit 502, a configuration unit 503, and a sending unit 504.

The receiving unit 501 is configured to receive a target parameter configuration that is sent by a network device based on a flight status of the flight terminal, where the target parameter configuration includes a first parameter configuration or a second parameter configuration;

the update unit 502 is configured to update a current parameter configuration to the target parameter configuration; and

the configuration unit 503 is configured to configure the flight terminal by using the target parameter configuration.

As shown in FIG. 10, a network device 600 in this embodiment of this application includes a receiving unit 601, a determining unit 602, and a sending unit 603.

The receiving unit 601 is configured to receive a status indication sent by a flight terminal, where the status indication is used to indicate a flight status of the flight terminal;

the determining unit 602 is configured to determine, based on the status indication, a target parameter configuration corresponding to the flight status, where the target parameter configuration includes a first parameter configuration or a second parameter configuration; and

the sending unit 603 is configured to send the target parameter configuration to the flight terminal.

It may be understood that for content not mentioned in the embodiment in FIG. 10 and specific implementation of each function unit, refer to the embodiment in FIG. 4. Details are not described herein.

In addition, an embodiment of the present invention further provides a communications system, and the communications system includes a flight terminal and a network device.

In an embodiment, the communications system may be the communications system shown in FIG. 9, the flight terminal may be the flight terminal 300, and the network device may be the network device 400. Alternatively, the flight terminal may be the flight terminal 100 described in the embodiment in FIG. 6, and the network device may be the network device 200 described in the embodiment in FIG. 7.

In another embodiment, the communications system may be the communications system shown in FIG. 10, the flight terminal may be the flight terminal 500, and the network device may be the network device 600. Alternatively, the flight terminal may be the flight terminal 100 described in the embodiment in FIG. 6, and the network device may be the network device 200 described in the embodiment in FIG. 7.

A person skilled in the art should be aware that the embodiments of the present invention may be provided as a method, a system, or a computer program product. Therefore, the present invention may use a form of hardware only embodiments, software only embodiments, or embodiments with a combination of software and hardware. Moreover, the present invention may use a form of a computer program product that is implemented on one or more computer-usable storage media (including but not limited to a disk memory, an optical memory, and the like) that include computer-usable program code.

The present invention is described with reference to the flowcharts and/or block diagrams of the method, the device (system), and the computer program product according to the embodiments of the present invention. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may also be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

Obviously, a person skilled in the art can make various modifications and variations to the present invention without departing from the spirit and scope of the present invention. The present invention is intended to cover these modifications and variations provided that they fall within the scope of protection defined by the following claims and their equivalent technologies.

**Claims**

1. A measurement report reporting method, comprising the following steps:

    receiving, by a flight terminal, one or more of a height threshold and a quantity threshold of neighboring cells that are sent by a network device; and
    determining, by the flight terminal based on one or more of the height threshold and the quantity threshold of neighboring cells, whether to report a measurement result.

2. The method according to claim 1, wherein the determining, by the flight terminal based on one or more of the height threshold and the quantity threshold of neighboring cells, whether to report a measurement result comprises:
    when the flight terminal meets one or more of the following conditions: a height is in a special state and a quantity of neighboring cells is in a special state, determining, by the flight terminal, to report the measurement result, wherein that the height is in a special state means that the height is greater than a first height threshold or means that the height is less than a second height threshold, that the quantity of neighboring cells is in a special state means that the quantity of neighboring cells is greater than a first quantity threshold of neighboring cells or means that the quantity of neighboring cells is less than a second quantity threshold of neighboring cells, and when the flight terminal receives a height threshold sent by a network, the measurement result comprises the height.

3. The method according to claim 1 or 2, wherein
the height threshold is further used to determine whether the flight terminal is in the air or on the ground; and
the quantity threshold of neighboring cells is further used to determine whether the flight terminal is in the air or on the ground.

4. The method according to any one of claims 1 to 3, wherein
one or more of the height threshold and the quantity threshold of neighboring cells are carried in a radio resource control RRC connection reconfiguration message.

5. A measurement report reporting method, comprising the following steps:

sending, by a network device, one or more of a height threshold and a quantity threshold of neighboring cells to a flight terminal; and
when the flight terminal meets one or more of the following conditions: a height is in a special state and a quantity of neighboring cells is in a special state, receiving, by the network device, a measurement report sent by the flight terminal, wherein that the height is in a special state means that the height is greater than a first height threshold or means that the height is less than a second height threshold, and that the quantity of neighboring cells is in a special state means that the quantity of neighboring cells is greater than a first quantity threshold of neighboring cells or means that the quantity of neighboring cells is less than a second quantity threshold of neighboring cells; wherein
when the network device sends the height threshold to the flight terminal, the measurement report further comprises the height.

6. The method according to claim 5, wherein
the height threshold is further used to determine whether the flight terminal is in the air or on the ground; and
the quantity threshold of neighboring cells is further used to determine whether the flight terminal is in the air or on the ground.

7. The method according to claim 5 or 6, wherein
one or more of the height threshold and the quantity threshold of neighboring cells are carried in a radio resource control RRC connection reconfiguration message.

8. A flight terminal, comprising a receiving module and a determining module, wherein
the receiving module is configured to receive one or more of a height threshold and a quantity threshold of neighboring cells that are sent by a network device; and
the determining module is configured to determine, based on one or more of the height threshold and the quantity threshold of neighboring cells, whether to report a measurement result.

9. The flight terminal according to claim 8, wherein
the determining module is configured to: when the flight terminal meets one or more of the following conditions: a height is in a special state and a quantity of neighboring cells is in a special state, determine, by the flight terminal, to report the measurement result, wherein that the height is in a special state means that the height is greater than a first height threshold or means that the height is less than a second height threshold, that the quantity of neighboring cells is in a special state means that the quantity of neighboring cells is greater than a first quantity threshold of neighboring cells or means that the quantity of neighboring cells is less than a second quantity threshold of neighboring cells, and when the flight terminal receives a height threshold sent by a network, the measurement result comprises the height.

10. The flight terminal according to claim 8 or 9, wherein
the height threshold is further used to determine whether the flight terminal is in the air or on the ground; and
the quantity threshold of neighboring cells is further used to determine whether the flight terminal is in the air or on the ground.

11. The flight terminal according to any one of claims 8 to 10, wherein
one or more of the height threshold and the quantity threshold of neighboring cells are carried in a radio resource control RRC connection reconfiguration message.

**12.** A network device, comprising a receiving module and a sending module, wherein
the sending module is configured to send one or more of a height threshold and a quantity threshold of neighboring cells to a flight terminal; and
the receiving module is configured to: when the flight terminal meets one or more of the following conditions: a height is in a special state and a quantity of neighboring cells is in a special state, receive, by the network device, a measurement report sent by the flight terminal, wherein that the height is in a special state means that the height is greater than a first height threshold or means that the height is less than a second height threshold, and that the quantity of neighboring cells is in a special state means that the quantity of neighboring cells is greater than a first quantity threshold of neighboring cells or means that the quantity of neighboring cells is less than a second quantity threshold of neighboring cells; wherein
when the network device sends the height threshold to the flight terminal, the measurement report further comprises the height.

**13.** The network device according to claim 12, wherein
the height threshold is further used to determine whether the flight terminal is in the air or on the ground; and
the quantity threshold of neighboring cells is further used to determine whether the flight terminal is in the air or on the ground.

**14.** The network device according to claim 12 or 13, wherein
one or more of the height threshold and the quantity threshold of neighboring cells are carried in a radio resource control RRC connection reconfiguration message.

**15.** A flight terminal, comprising a processor and a receiver that are coupled to each other, wherein
the receiver is configured to receive one or more of a height threshold and a quantity threshold of neighboring cells that are sent by a network device; and
the processor is configured to determine, based on one or more of the height threshold and the quantity threshold of neighboring cells, whether to report a measurement result.

**16.** The flight terminal according to claim 15, wherein
the processor is configured to: when the flight terminal meets one or more of the following conditions: a height is in a special state and a quantity of neighboring cells is in a special state, determine, by the flight terminal, to report the measurement result, wherein that the height is in a special state means that the height is greater than a first height threshold or means that the height is less than a second height threshold, that the quantity of neighboring cells is in a special state means that the quantity of neighboring cells is greater than a first quantity threshold of neighboring cells or means that the quantity of neighboring cells is less than a second quantity threshold of neighboring cells, and when the flight terminal receives a height threshold sent by a network, the measurement result comprises the height.

**17.** The flight terminal according to claim 15 or 16, wherein
the height threshold is further used to determine whether the flight terminal is in the air or on the ground; and
the quantity threshold of neighboring cells is further used to determine whether the flight terminal is in the air or on the ground.

**18.** The flight terminal according to any one of claims 15 to 17, wherein
one or more of the height threshold and the quantity threshold of neighboring cells are carried in a radio resource control RRC connection reconfiguration message.

**19.** A network device, comprising a receiver and a transmitter, wherein
the transmitter is configured to send one or more of a height threshold and a quantity threshold of neighboring cells to a flight terminal; and
the receiver is configured to: when the flight terminal meets one or more of the following conditions: a height is in a special state and a quantity of neighboring cells is in a special state, receive, by the network device, a measurement report sent by the flight terminal, wherein that the height is in a special state means that the height is greater than a first height threshold or means that the height is less than a second height threshold, and that the quantity of neighboring cells is in a special state means that the quantity of neighboring cells is greater than a first quantity threshold of neighboring cells or means that the quantity of neighboring cells is less than a second quantity threshold of neighboring cells; wherein
when the network device sends the height threshold to the flight terminal, the measurement report further comprises the height.

20. The network device according to claim 19, wherein
the height threshold is further used to determine whether the flight terminal is in the air or on the ground; and
the quantity threshold of neighboring cells is further used to determine whether the flight terminal is in the air or on the ground.

21. The network device according to claim 19 or 20, wherein
one or more of the height threshold and the quantity threshold of neighboring cells are carried in a radio resource control RRC connection reconfiguration message.

22. A computer storage medium, wherein the non-transitory storage medium stores a program, and when the program is executed by a processor, the method according to any one of claims 1 to 21 is implemented.

23. A communications system, comprising a network device and a flight terminal, wherein the network device can communicate with the flight terminal; and when the flight terminal is the flight terminal according to any one of claims 8 to 11, the network device is the network device according to any one of claims 12 to 14; or when the flight terminal is the flight terminal according to any one of claims 15 to 18, the network device is the network device according to any one of claims 19 to 21.

24. A parameter configuration selection method, comprising the following steps:

receiving, by a flight terminal, indication information sent by a network device, wherein the indication information is used to indicate an identifier of a target parameter configuration to which the flight terminal is to be switched;
selecting, by the flight terminal according to the indication information, a parameter configuration corresponding to the identifier from a plurality of parameter configurations as the target parameter configuration, wherein the plurality of parameter configurations comprise at least a first parameter configuration and a second parameter configuration; and
configuring, by the flight terminal, the flight terminal by using the target parameter configuration.

25. The method according to claim 24, wherein the first parameter configuration comprises at least one of a first cell selection and reselection parameter, a first tracking area list, a first measurement-related parameter, a first radio link failure parameter, and a first power control parameter;
the first cell selection and reselection parameter comprises at least one of a first cell quality value threshold, a first cell received signal value threshold, an offset value of the first cell quality value threshold, an offset value of the first cell received signal value threshold, and a first cell access barring indication;
the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;
the first radio link failure parameter comprises a first out-of-synchronization threshold; and
the first power control parameter comprises at least one of power of a first PDCCH, power of a first PUSH on a subcarrier c, expected receive power of a first base station, and a power control parameter of a first PRACH.

26. The method according to claim 24, wherein the second parameter configuration comprises at least one of a second cell selection and reselection parameter, a second tracking area list, a second measurement-related parameter, a second radio link failure parameter, and a second power control parameter;
the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

27. A parameter configuration selection method, comprising the following steps:

receiving, by a network device, a status indication sent by a flight terminal, wherein the status indication is used to indicate a flight status of the flight terminal;

determining, by the network device, indication information based on the status indication, wherein the indication information is used to indicate a target parameter configuration to which the flight terminal is to be switched, and the target parameter configuration is a first parameter configuration or a second parameter configuration; and

sending, by the network device, the indication information to the flight terminal.

28. The method according to claim 27, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and

the first power control parameter comprises at least one of power of a first PDCCH, power of a first PUSH on a subcarrier c, expected receive power of a first base station, and a power control parameter of a first PRACH.

29. The method according to claim 27, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter; the second radio link failure parameter comprises a second out-of-synchronization threshold; and the second power control parameter comprises at least one of power of a second PDCCH, power of a second PUSH on a subcarrier c, expected receive power of a second base station, and a power control parameter of a second PRACH.

30. A parameter configuration selection method, comprising the following steps:

receiving, by a flight terminal, a target parameter configuration that is sent by a network device based on a flight status of the flight terminal, wherein the target parameter configuration comprises a first parameter configuration or a second parameter configuration; updating, by the flight terminal, a current parameter configuration to the target parameter configuration; and configuring, by the flight terminal, the flight terminal by using the target parameter configuration.

31. The method according to claim 30, wherein the first parameter configuration comprises at least one of a first cell selection and reselection parameter, a first tracking area list, a first measurement-related parameter, a first radio link failure parameter, and a first power control parameter; the first cell selection and reselection parameter comprises at least one of a first cell quality value threshold, a first cell received signal value threshold, an offset value of the first cell quality value threshold, an offset value of the first cell received signal value threshold, and a first cell access barring indication; the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter; the first radio link failure parameter comprises a first out-of-synchronization threshold; and the first power control parameter comprises at least one of power of a first PDCCH, power of a first PUSH on a subcarrier c, expected receive power of a first base station, and a power control parameter of a first PRACH.

32. The method according to claim 30, wherein the second parameter configuration comprises at least one of a second cell selection and reselection parameter, a second tracking area list, a second measurement-related parameter, a second radio link failure parameter, and a second power control parameter; the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell; the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter; the second radio link failure parameter comprises a second out-of-synchronization threshold; and the second power control parameter comprises at least one of power of a second PDCCH, power of a second PUSH on a subcarrier c, expected receive power of a second base station, and a power control parameter of a second PRACH.

33. A parameter configuration selection method, comprising the following steps:

receiving, by a network device, a status indication sent by a flight terminal, wherein the status indication is used to indicate a flight status of the flight terminal;

determining, by the network device based on the status indication, a target parameter configuration corresponding to the flight status, wherein the target parameter configuration comprises a first parameter configuration or a second parameter configuration; and

sending, by the network device, the target parameter configuration to the flight terminal.

34. The method according to claim 33, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and

the first power control parameter comprises at least one of power of a first PDCCH, power of a first PUSH on a subcarrier c, expected receive power of a first base station, and a power control parameter of a first PRACH.

35. The method according to claim 33, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

36. A flight terminal, comprising a processor and a receiver that are coupled to each other, wherein

the receiver is configured to receive indication information sent by a network device, wherein the indication information is used to indicate an identifier of a target parameter configuration to which the flight terminal is to be switched;

the processor is configured to select, according to the indication information, a parameter configuration corresponding to the identifier from a plurality of parameter configurations as the target parameter configuration, wherein the plurality of parameter configurations comprise at least a first parameter configuration and a second parameter configuration; and

the processor is configured to configure the flight terminal by using the target parameter configuration.

**37.** The flight terminal according to claim 36, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and the first power control parameter comprises at least one of power of a first PDCCH, power of a first PUSH on a subcarrier c, expected receive power of a first base station, and a power control parameter of a first PRACH.

**38.** The flight terminal according to claim 36, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

**39.** A network device, comprising a processor, a receiver, and a transmitter that are coupled to each other, wherein the receiver is configured to receive a status indication sent by a flight terminal, wherein the status indication is used to indicate a flight status of the flight terminal;

the processor is configured to determine indication information based on the status indication, wherein the indication information is used to indicate a target parameter configuration to which the flight terminal is to be switched, and the target parameter configuration is a first parameter configuration or a second parameter configuration; and

the transmitter is configured to send the indication information to the flight terminal.

**40.** The network device according to claim 39, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and

the first power control parameter comprises at least one of power of a first PDCCH, power of a first PUSH on a subcarrier c, expected receive power of a first base station, and a power control parameter of a first PRACH.

41. The network device according to claim 39, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

42. A flight terminal, comprising a processor and a receiver that are coupled to each other, wherein

the receiver is configured to receive a target parameter configuration that is sent by a network device based on a flight status of the flight terminal, wherein the target parameter configuration comprises a first parameter configuration or a second parameter configuration;

the processor is configured to update a current parameter configuration to the target parameter configuration; and

the processor is configured to configure the flight terminal by using the target parameter configuration.

43. The flight terminal according to claim 42, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and

the first power control parameter comprises at least one of power of a first PDCCH, power of a first PUSH on a subcarrier c, expected receive power of a first base station, and a power control parameter of a first PRACH.

44. The flight terminal according to claim 42, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

45. A network device, comprising a processor, a receiver, and a transmitter that are coupled to each other, wherein the receiver is configured to receive a status indication sent by a flight terminal, wherein the status indication is used to indicate a flight status of the flight terminal;

the processor is configured to determine, based on the status indication, a target parameter configuration corresponding to the flight status, wherein the target parameter configuration comprises a first parameter configuration or a second parameter configuration; and

the transmitter is configured to send the target parameter configuration to the flight terminal.

46. The network device according to claim 45, wherein the first parameter configuration comprises at least one of a first cell selection and reselection parameter, a first tracking area list, a first measurement-related parameter, a first radio link failure parameter, and a first power control parameter;

the first cell selection and reselection parameter comprises at least one of a first cell quality value threshold, a first cell received signal value threshold, an offset value of the first cell quality value threshold, an offset value of the first cell received signal value threshold, and a first cell access barring indication;

the first measurement-related parameter comprises at least one of a hysteresis parameter of a first A1 event, a threshold parameter of the first A1 event, a hysteresis parameter of a first A2 event, a threshold parameter of the first A2 event, a frequency offset of a first A3 event, a cell offset of the first A3 event, a hysteresis parameter of the first A3 event, an offset of the first A3 event, a frequency offset of a first A4 event, a cell offset of the first A4 event, a hysteresis parameter of the first A4 event, a threshold parameter of the first A4 event, a first maximum cell quantity, a first log measurement area, and a first time trigger parameter;

the first radio link failure parameter comprises a first out-of-synchronization threshold; and

the first power control parameter comprises at least one of power of a first PDCCH, power of a first PUSH on a subcarrier c, expected receive power of a first base station, and a power control parameter of a first PRACH.

47. The network device according to claim 45, wherein the second parameter configuration comprises at least one of a second cell selection and reselection parameter, a second tracking area list, a second measurement-related parameter, a second radio link failure parameter, and a second power control parameter;

the second cell selection and reselection parameter comprises at least one of a second cell quality value threshold, a second cell received signal value threshold, an offset value of the second cell quality value threshold, an offset value of the second cell received signal value threshold, an access signal-to-noise ratio threshold, an offset value of the access signal-to-noise ratio threshold, a cell frequency priority, a second cell access barring indication, a height access barring indication, and a no-fly zone access barring indication, wherein the access signal-to-noise ratio threshold is a lowest signal-to-noise ratio at which the flight terminal is allowed to access a cell, the offset value of the access signal-to-noise ratio threshold is an offset value of the lowest signal-to-noise ratio at which the flight terminal is allowed to access a cell, the cell frequency priority is used to indicate respective cell access priorities corresponding to different cell frequencies when the flight terminal selects or reselects a cell, the height access barring indication is used to indicate that a flight terminal that exceeds a height threshold is barred from accessing a cell, and the no-fly zone access barring indication is used to indicate that a flight terminal in a no-fly zone is barred from accessing a cell;

the second measurement-related parameter comprises at least one of a hysteresis parameter of a second A1 event, a threshold parameter of the second A1 event, a hysteresis parameter of a second A2 event, a threshold parameter of the second A2 event, a frequency offset of a second A3 event, a cell offset of the second A3 event, a hysteresis parameter of the second A3 event, an offset of the second A3 event, a frequency offset of a second A4 event, a cell offset of the second A4 event, a hysteresis parameter of the second A4 event, a threshold parameter of the second A4 event, a second maximum cell quantity, a second log measurement area, and a second time trigger parameter;

the second radio link failure parameter comprises a second out-of-synchronization threshold; and

the second power control parameter comprises at least one of power of a second PDCCH, power of a second PUSH on a subcarrier c, expected receive power of a second base station, and a power control parameter of a second PRACH.

48. A computer-readable storage medium, wherein the computer-readable storage medium stores a computer program, and when the computer program is executed by a processor, the method according to any one of claims 25 to 47 is implemented.

49. A communications system, comprising a network device and a flight terminal, wherein the network device can communicate with the flight terminal; and when the flight terminal is the flight terminal according to any one of claims 36 to 38, the network device is the network device according to any one of claims 39 to 41; or when the flight terminal is the flight terminal according to any one of claims 41 to 43, the network device is the network device according to any one of claims 44 to 47.

In the air

Cell coverage area

On the
ground

Cell coverage area

FIG. 1

In the air

On the ground

FIG. 2

```
    ┌──────────┐                                    ┌──────────┐
    │  Flight  │                                    │ Network  │
    │ terminal │                                    │  device  │
    └──────────┘                                    └──────────┘
         │                                               │
 ┌───────────────────────────┐                           │
 │ S101. Measure an environment to                       │
 │    obtain a status parameter                          │
 └───────────────────────────┘                           │
         │                                               │
 ┌───────────────────────────┐                           │
 │ S102. Generate a status indication                    │
 │   based on the status parameter                       │
 └───────────────────────────┘                           │
         │                                               │
         │──── S103. Send the status indication ────────▶│
         │                                               │
         │                           ┌───────────────────────────┐
         │                           │ S104. Determine indication │
         │                           │  information based on the  │
         │                           │      status indication     │
         │                           └───────────────────────────┘
         │                                               │
         │◀──── S105. Send the indication information ────│
         │                                               │
 ┌───────────────────────────┐                           │
 │ S106. Select a target parameter                       │
 │ configuration from a plurality of                     │
 │    parameter configurations                           │
 └───────────────────────────┘                           │
         │                                               │
 ┌───────────────────────────┐                           │
 │ S107. Configure the flight terminal                   │
 │   by using the target parameter                       │
 │          configuration                                │
 └───────────────────────────┘                           │
         │                                               │
```

FIG. 3

```
┌─────────────┐                                    ┌─────────────┐
│   Flight    │                                    │   Network   │
│  terminal   │                                    │   device    │
└─────────────┘                                    └─────────────┘
      │                                                   │
┌───────────────────────────┐                            │
│ S201. Measure an environ- │                            │
│ ment to obtain a status   │                            │
│ parameter                 │                            │
└───────────────────────────┘                            │
      │                                                   │
┌───────────────────────────┐                            │
│ S202. Generate a status   │                            │
│ indication based on the   │                            │
│ status parameter          │                            │
└───────────────────────────┘                            │
      │                                                   │
      │─── S203. Send the status indication ─────────────►│
      │                                                   │
      │                            ┌──────────────────────────────────┐
      │                            │ S204. Select a target parameter  │
      │                            │ configuration from a plurality of│
      │                            │ parameter configurations based   │
      │                            │ on the height status indication  │
      │                            └──────────────────────────────────┘
      │                                                   │
      │◄── S205. Send the target parameter configuration ─│
      │                                                   │
┌───────────────────────────┐                            │
│ S206. Update a current    │                            │
│ parameter configuration to│                            │
│ the target parameter      │                            │
│ configuration             │                            │
└───────────────────────────┘                            │
      │                                                   │
┌───────────────────────────┐                            │
│ S207. Configure the flight│                            │
│ terminal by using the     │                            │
│ target parameter          │                            │
│ configuration             │                            │
└───────────────────────────┘                            │
      │                                                   │
```

FIG. 4

```
┌──────────┐                                      ┌──────────┐
│  Flight  │                                      │ Network  │
│ terminal │                                      │  device  │
└──────────┘                                      └──────────┘
     │         S301. Send a plurality of                │
     │◄────────  parameter configurations  ────────     │
     │                                                  │
┌────┴───────────────────────────────┐                 │
│ S302. Measure a flight environment to│                │
│     obtain a status parameter        │                │
└────┬───────────────────────────────┘                 │
     │                                                  │
┌────┴───────────────────────────────┐                 │
│ S303. Determine a flight height status of│             │
│   the flight terminal based on the   │               │
│    environment status parameter      │               │
└────┬───────────────────────────────┘                 │
     │                                                  │
┌────┴───────────────────────────────┐                 │
│   S304. Select a target parameter    │               │
│  configuration from the plurality of │               │
│      parameter configurations        │               │
└────┬───────────────────────────────┘                 │
     │                                                  │
┌────┴───────────────────────────────┐                 │
│  S305. Configure the flight terminal by│              │
│ using the target parameter configuration│             │
└────┬───────────────────────────────┘                 │
     │                                                  │
```

FIG. 5

Flight terminal 100

FIG. 6

Network device 200

Memory (ROM) 202

Bus 205

Transmitter 203

Receiver 204

Processor 201

FIG. 7

| Flight terminal 100 | | | | | Network device 200 | | |
|---|---|---|---|---|---|---|---|
| Status monitoring element 1056 | Processor 101 | Receiver 104 | Transmitter 103 | | Receiver 204 | Transmitter 203 | Processor 201 |

1. Measure an environment to obtain a status parameter

2. Send the status parameter →

3. Generate a status indication based on the status parameter

4. Send the status indication →

5. Send the status indication →

6. Send the status indication →

7. Determine indication information based on the status indication

TO
FIG. 8B

TO
FIG. 8B

TO
FIG. 8B

FIG. 8A

CONT.
FROM
FIG. 8A

CONT.
FROM
FIG. 8A

CONT.
FROM
FIG. 8A

8. Send the
indication
information

9. Send the indication information

10. Send the
indication
information

11. Select a target parameter
configuration from a plurality
of parameter configurations

12. Configure the flight
terminal by using the target
parameter configuration

FIG. 8B

FIG. 9

EP 3 637 732 A1

600

603

Sending unit

Determining
unit

602          601

Receiving
unit

500

501          502

Receiving
unit

Update unit

503

Sending
unit

503

Configuration
unit

FIG. 10

## INTERNATIONAL SEARCH REPORT

| International application No. |
| --- |
| **PCT/CN2018/093731** |

| A. | CLASSIFICATION OF SUBJECT MATTER |
| --- | --- |
| | H04L 29/08(2006.01)i; H04B 7/185(2006.01)i; H04W 36/08(2009.01)n |

According to International Patent Classification (IPC) or to both national classification and IPC

| B. | FIELDS SEARCHED |
| --- | --- |

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNTXT; CNABS; CNKI; VEN; USTXT; EPTXT; WOTXT: 飞行器, 无人机, 空中, 高空, 地面, 高度, 三维, 位置, 参数, 配置, 小区, 重选, 选择, 测量, 功率, 跟踪区, Aircraft, airplane, aerocraft, copter, altitude, position, dynamic, ATG, air, ground, dimensional, cell, base station, switch, choose, power, transmission, adjust, decrease

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | US 8688101 B1 (SMARTSKY NETWORKS LLC.) 01 April 2014 (2014-04-01) description, column 3, line 63 to column 14, line 38, and figures 1-4 | 24, 27, 30, 33, 36, 39, 42, 45, 48, 49 |
| A | CN 105594233 A (SMARTSKY NETWORKS LLC) 18 May 2016 (2016-05-18) entire document | 1-49 |
| A | WO 2013079512 A1 (AIRBUS OPERATIONS GMBH) 06 June 2013 (2013-06-06) entire document | 1-49 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **27 August 2018** | **07 September 2018** |

| Name and mailing address of the ISA/CN | Authorized officer |
| --- | --- |
| **State Intellectual Property Office of the P. R. China** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| :-- |
| **PCT/CN2018/093731** |

| Patent document cited in search report | | | Publication date (day/month/year) | Patent family member(s) | | | Publication date (day/month/year) |
| :-- | :-- | :-- | :-- | :-- | :-- | :-- | :-- |
| US | 8688101 | B1 | 01 April 2014 | WO | 2014168742 | A8 | 19 November 2015 |
| | | | | EP | 2885939 | B1 | 31 January 2018 |
| | | | | WO | 2014168742 | A1 | 16 October 2014 |
| | | | | EP | 3331258 | A1 | 06 June 2018 |
| | | | | EP | 2885939 | A1 | 24 June 2015 |
| CN | 105594233 | A | 18 May 2016 | JP | 2016539588 | A | 15 December 2016 |
| | | | | EP | 3044977 | A4 | 08 February 2017 |
| | | | | WO | 2015038591 | A1 | 19 March 2015 |
| | | | | EP | 3044977 | A1 | 20 July 2016 |
| | | | | US | 2016227460 | A1 | 04 August 2016 |
| | | | | AU | 2014318944 | A1 | 31 March 2016 |
| | | | | IN | 201637008600 | A | 17 June 2016 |
| | | | | AU | 2014318944 | B2 | 09 August 2018 |
| WO | 2013079512 | A1 | 06 June 2013 | EP | 2786616 | B1 | 06 April 2016 |
| | | | | EP | 2786616 | A1 | 08 October 2014 |

Form PCT/ISA/210 (patent family annex) (January 2015)